# EUROPEAN PATENT SPECIFICATION

(11) **EP 3 912 299 B1**
(45) Date of publication and mention of the grant of the patent: **15.11.2023**
(21) Application number: 20704155.9
(22) Date of filing: 10.01.2020
(51) Int. Cl.: H04L 5/00, H04W 72/04

(54) **UPLINK CONTROL CHANNEL CODEBOOK DESIGN IN NEW RADIO UNLICENSED**
CODEBUCHENTWURF EINES UPLINK-STEUERUNGSKANALS IN NEW RADIO UNLICENSED
CONCEPTION DE LIVRE DE CODES DE CANAL DE COMMANDE DE LIAISON MONTANTE POUR NOUVELLE RADIO SANS LICENCE

(30) Priority: 14.01.2019 US 201962792340 P; 09.01.2020 US 202016738850
(43) Date of publication of application: 24.11.2021
(73) Proprietor: QUALCOMM INCORPORATED, San Diego, California 92121-1714 (US)
(72) Inventor: FAN, Zhifei, San Diego, California 92121-1714 (US); LUO, Tao, San Diego, California 92121-1714 (US); ZHANG, Xiaoxia, San Diego, California 92121-1714 (US); CHANDE, Vinay, San Diego, California 92121-1714 (US); SUN, Jing, San Diego, California 92121-1714 (US); CHENDAMARAI KANNAN, Arumugam, San Diego, California 92121-1714 (US)
(74) Representative: Dunlop, Hugh Christopher
(86) International application number: PCT/US2020/013144
(87) International publication number: WO 2020/150104

(56) References cited:
- US-A1- 2016 205 679
- US-A1- 2017 310 426
- HTC: "Discussion on CBG-based HARQ feedback multiplexing", 3GPP DRAFT; R1-1713864 DISCUSSION ON CBG-BASED HARQ FEEDBACK MULTIPLEXING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDE , vol. RAN WG1, no. Prague, Czechia; 20170821 - 20170825 20 August 2017 (2017-08-20), XP051316658, Retrieved from the Internet: URL:http://www.3gpp.org/ftp/Meetings_3GPP_ SYNC/RAN1/Docs/ [retrieved on 2017-08-20]

## Description

### BACKGROUND

The following relates generally to wireless communications, and more specifically to uplink control channel codebook design in New Radio (NR) unlicensed.

Wireless communication systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal frequency division multiple access (OFDMA), or discrete Fourier transform spread orthogonal frequency division multiplexing (DFT-S-OFDM). A wireless multiple-access communications system may include a number of base stations or network access nodes, each simultaneously supporting communication for multiple communication devices, which may be otherwise known as user equipment (UE).

Wireless networks typically utilize feedback reports to indicate whether or not a transmission was received. The feedback report may be hybrid automatic repeat request (HARQ) based, utilizing one or more bits to indicate whether a particular transmission was received. Typically and for downlink data transmissions, this may include the base station transmitting a grant (e.g., downlink control information (DCI)) that identifies or otherwise conveys an indication of resources for a corresponding downlink data transmission. The grant may also carry or otherwise convey an indication of a reporting occasion in which the feedback report for the downlink data transmission is to be provided. The UE receives the grant and identifies the resources and reporting occasion for the downlink data transmission, and uses this information to receive the downlink data transmission and provide the feedback report to the base station. Conventionally, the LTE utilizes a codebook to configure or otherwise select the format for the feedback report. The format for the feedback report (e.g., based on the codebook design) may change from one reporting occasion to the next, e.g., based on how many downlink data transmissions have been configured for a particular reporting occasion.

US 2017/310426 A1 (FAN ZHIFEI [US] ET AL) 26 October 2017, relates to acknowledgment of transmissions in a wireless communication system. HTC: "Discussion on CBG-based HARQ feedback multiplexing", 3GPP DRAFT; R1-1713864 DISCUSSION ON CBG-BASED HARQ FEEDBACK MULTIPLEXING, 3RD GENERATION PARTNERSHIP PROJECT (3GPP), vol. RAN WG1,no. Prague, Czechia; 20170821 - 20170825 20 August 2017 (2017-08-20), XP051316658, relates to "CBG-based HARQ feedback multiplexing. US 2016/205679 A1 (YOO TAESANG [US] ET AL) 14 July 2016, relates to communicating control information related to communications using an enhanced component carrier (eCC).

### SUMMARY

The present invention is set out in the independent claims whereas preferred embodiments and further implementations are outlined in the dependent claims, description and figures.

### BRIEF DESCRIPTION OF THE DRAWINGS

FIG. 1 illustrates an example of a system for wireless communications that supports uplink control channel codebook design in New Radio (NR) unlicensed in accordance with aspects of the present disclosure.
FIG. 2 illustrates an example of a wireless communication system that supports uplink control channel codebook design in NR unlicensed in accordance with aspects of the present disclosure.
FIG. 3 illustrates an example of a timeline that supports uplink control channel codebook design in NR unlicensed in accordance with aspects of the present disclosure.
FIG. 4 illustrates an example of a timeline that supports uplink control channel codebook design in NR unlicensed in accordance with aspects of the present disclosure.
FIG. 5 illustrates an example of a process that supports uplink control channel codebook design in NR unlicensed in accordance with aspects of the present disclosure.
FIGs. 6 and 7 show block diagrams of devices that support uplink control channel codebook design in NR unlicensed in accordance with aspects of the present disclosure.
FIG. 8 shows a block diagram of a communications manager that supports uplink control channel codebook design in NR unlicensed in accordance with aspects of the present disclosure.
FIG. 9 shows a diagram of a system including a device that supports uplink control channel codebook design in NR unlicensed in accordance with aspects of the present disclosure.
FIGs. 10 and 11 show block diagrams of devices that support uplink control channel codebook design in NR unlicensed in accordance with aspects of the present disclosure.
FIG. 12 shows a block diagram of a communications manager that supports uplink control channel codebook design in NR unlicensed in accordance with aspects of the present disclosure.
FIG. 13 shows a diagram of a system including a device that supports uplink control channel codebook design in NR unlicensed in accordance with aspects of the present disclosure.
FIGs. 14 through 16 show flowcharts illustrating methods that support uplink control channel codebook design in NR unlicensed in accordance with aspects of the present disclosure.

### DETAILED DESCRIPTION

The invention is defined by the appended claims.

Wireless networks typically utilize feedback reports to indicate whether or not a transmission was received. The feedback report may be hybrid automatic repeat request (HARQ) based, where the feedback report may utilize one or more bits to indicate whether a particular transmission was received. Typically and for downlink data transmissions, this may include the base station transmitting a grant (e.g., downlink control information (DCI)) that identifies or otherwise conveys an indication of resources for a corresponding downlink data transmission. The grant may also carry or otherwise convey an indication of a reporting occasion in which the feedback report for the downlink data transmission is to be provided. The UE receives the grant and identifies the resources and reporting occasion for the downlink data transmission, and uses this information to receive the downlink data transmission and provide the feedback report to the base station. Conventionally, the feedback report carries or conveys acknowledgment/negative-acknowledgment (ACK/NACK) information using one or more bits for each downlink data transmission.

Some wireless networks may support ACK/NACK bundling in the feedback report, e.g., a single feedback report may carry or convey ACK/NACK information for multiple downlink data transmissions received during the same slot and/or during different slots. Conventionally, the UE utilizes a codebook to configure or otherwise select the format for the feedback report. The format for the feedback report (e.g., based on the codebook design) may change from one reporting occasion to the next, e.g., based on how many downlink data transmissions have been configured for a particular reporting occasion. Accordingly, the base station may know or expect the format of the feedback report from the UE based on the downlink data transmissions to the UE. When the wireless network operates in a licensed radio frequency spectrum band, the base station and the UE are able to coordinate such that channel access (and the corresponding downlink data transmissions) are scheduled, resulting in the format for the feedback report being reliable. However, when the wireless network is operating in an unlicensed or shared radio frequency spectrum band, conventional techniques may be inadequate due to the requirement that a listen-before-talk (LBT) procedure must be performed on the channel before access. For example, the base station may be unsuccessful in its LBT procedure, which the UE is unaware of. In this instance, the UE may not know that a downlink grant was never received, which may result in the UE transmitting or otherwise providing a feedback report to the base station having a format that is inconsistent with what the base station expects. This may disrupt the HARQ process and interfere with wireless communications between the base station and the UE.

Aspects of the disclosure are initially described in the context of a wireless communication system. Broadly, aspects of the described techniques may support one or more bits being added to a downlink grant to carry or otherwise convey an indication of whether the downlink grant is a last downlink grant for a corresponding last data transmission associated with a reporting occasion. For example, the base station and UE may be operating in a shared or unlicensed radio frequency spectrum band where the base station performs dynamically scheduled downlink data transmissions to the UE. The base station may configure, encode, or otherwise provide one or more bits in each of the downlink grants to signal whether it is the last downlink grant for the corresponding last data transmission for the reporting occasion. The UE may receive the downlink grants and check the one or more bits to determine whether a downlink grant is the last downlink grant for the corresponding last data transmission for the reporting occasion. Accordingly, the UE may determine whether or not the last downlink grant for the corresponding last data transmission is received from the base station. The UE may use this information when selecting or otherwise configuring a format for a feedback report reporting ACK/NACK information (e.g., a feedback state) for each received downlink data transmission associated with the reporting occasion. The UE may transmit the feedback report to the base station according to the selected format and during the reporting occasion.

Aspects of the disclosure are further illustrated by and described with reference to apparatus diagrams, system diagrams, and flowcharts that relate to uplink control channel codebook design in New Radio (NR) unlicensed.

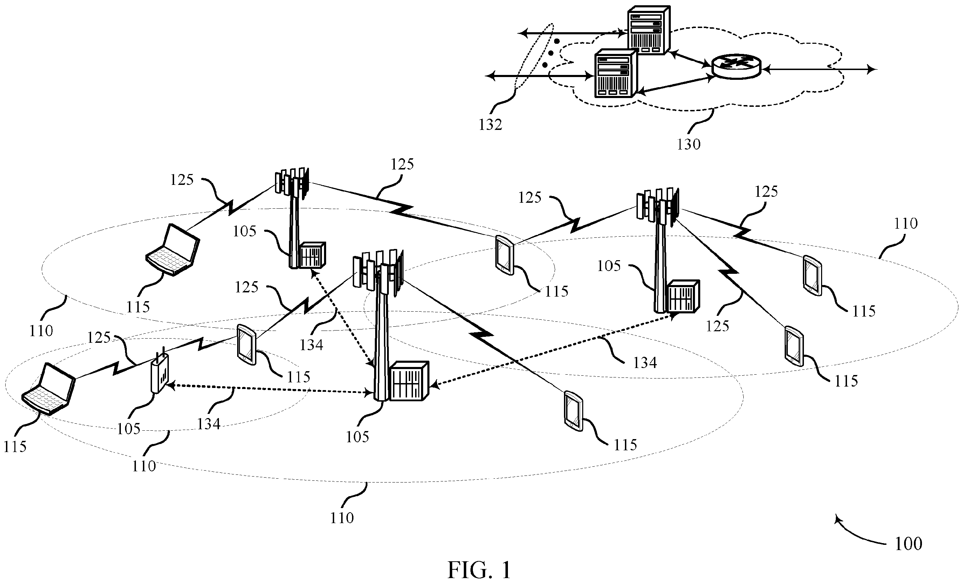

**FIG.** 1 illustrates an example of a wireless communication system 100 that supports uplink control channel codebook design in NR unlicensed in accordance with aspects of the present disclosure. The wireless communication system 100 includes base stations 105, UEs 115, and a core network 130. In some examples, the wireless communication system 100 may be a Long Term Evolution (LTE) network, an LTE-Advanced (LTE-A) network, an LTE-A Pro network, or a NR network. In some cases, wireless communication system 100 may support enhanced broadband communications, ultra-reliable (e.g., mission critical) communications, low latency communications, or communications with low-cost and low-complexity devices.

Base stations 105 may wirelessly communicate with UEs 115 via one or more base station antennas. Base stations 105 described herein may include or may be referred to by those skilled in the art as a base transceiver station, a radio base station, an access point, a radio transceiver, a NodeB, an eNodeB (eNB), a next-generation NodeB or giga-NodeB (either of which may be referred to as a gNB), a Home NodeB, a Home eNodeB, or some other suitable terminology. Wireless communication system 100 may include base stations 105 of different types (e.g., macro or small cell base stations). The UEs 115 described herein may be able to communicate with various types of base stations 105 and network equipment including macro eNBs, small cell eNBs, gNBs, relay base stations, and the like.

Each base station 105 may be associated with a particular geographic coverage area 110 in which communications with various UEs 115 is supported. Each base station 105 may provide communication coverage for a respective geographic coverage area 110 via communication links 125, and communication links 125 between a base station 105 and a UE 115 may utilize one or more carriers. Communication links 125 shown in wireless communication system 100 may include uplink transmissions from a UE 115 to a base station 105, or downlink transmissions from a base station 105 to a UE 115. Downlink transmissions may also be called forward link transmissions while uplink transmissions may also be called reverse link transmissions.

The geographic coverage area 110 for a base station 105 may be divided into sectors making up a portion of the geographic coverage area 110, and each sector may be associated with a cell. For example, each base station 105 may provide communication coverage for a macro cell, a small cell, a hot spot, or other types of cells, or various combinations thereof. In some examples, a base station 105 may be movable and therefore provide communication coverage for a moving geographic coverage area 110. In some examples, different geographic coverage areas 110 associated with different technologies may overlap, and overlapping geographic coverage areas 110 associated with different technologies may be supported by the same base station 105 or by different base stations 105. The wireless communication system 100 may include, for example, a heterogeneous LTE/LTE-A/LTE-A Pro or NR network in which different types of base stations 105 provide coverage for various geographic coverage areas 110.

The term "cell" refers to a logical communication entity used for communication with a base station 105 (e.g., over a carrier), and may be associated with an identifier for distinguishing neighboring cells (e.g., a physical cell identifier (PCID), a virtual cell identifier (VCID)) operating via the same or a different carrier. In some examples, a carrier may support multiple cells, and different cells may be configured according to different protocol types (e.g., machine-type communication (MTC), narrowband Internet-of-Things (NB-IoT), enhanced mobile broadband (eMBB), or others) that may provide access for different types of devices. In some cases, the term "cell" may refer to a portion of a geographic coverage area 110 (e.g., a sector) over which the logical entity operates.

UEs 115 may be dispersed throughout the wireless communication system 100, and each UE 115 may be stationary or mobile. A UE 115 may also be referred to as a mobile device, a wireless device, a remote device, a handheld device, or a subscriber device, or some other suitable terminology, where the "device" may also be referred to as a unit, a station, a terminal, or a client. A UE 115 may also be a personal electronic device such as a cellular phone, a personal digital assistant (PDA), a tablet computer, a laptop computer, or a personal computer. In some examples, a UE 115 may also refer to a wireless local loop (WLL) station, an Internet of Things (IoT) device, an Internet of Everything (IoE) device, or an MTC device, or the like, which may be implemented in various articles such as appliances, vehicles, meters, or the like.

Some UEs 115, such as MTC or IoT devices, may be low cost or low complexity devices, and may provide for automated communication between machines (e.g., via Machine-to-Machine (M2M) communication). M2M communication or MTC may refer to data communication technologies that allow devices to communicate with one another or a base station 105 without human intervention. In some examples, M2M communication or MTC may include communications from devices that integrate sensors or meters to measure or capture information and relay that information to a central server or application program that can make use of the information or present the information to humans interacting with the program or application. Some UEs 115 may be designed to collect information or enable automated behavior of machines. Examples of applications for MTC devices include smart metering, inventory monitoring, water level monitoring, equipment monitoring, healthcare monitoring, wildlife monitoring, weather and geological event monitoring, fleet management and tracking, remote security sensing, physical access control, and transaction-based business charging.

Some UEs 115 may be configured to employ operating modes that reduce power consumption, such as half-duplex communications (e.g., a mode that supports one-way communication via transmission or reception, but not transmission and reception simultaneously). In some examples half-duplex communications may be performed at a reduced peak rate. Other power conservation techniques for UEs 115 include entering a power saving "deep sleep" mode when not engaging in active communications, or operating over a limited bandwidth (e.g., according to narrowband communications). In some cases, UEs 115 may be designed to support critical functions (e.g., mission critical functions), and a wireless communication system 100 may be configured to provide ultra-reliable communications for these functions.

In some cases, a UE 115 may also be able to communicate directly with other UEs 115 (e.g., using a peer-to-peer (P2P) or device-to-device (D2D) protocol). One or more of a group of UEs 115 utilizing D2D communications may be within the geographic coverage area 110 of a base station 105. Other UEs 115 in such a group may be outside the geographic coverage area 110 of a base station 105, or be otherwise unable to receive transmissions from a base station 105. In some cases, groups of UEs 115 communicating via D2D communications may utilize a one-to-many (1:M) system in which each UE 115 transmits to every other UE 115 in the group. In some cases, a base station 105 facilitates the scheduling of resources for D2D communications. In other cases, D2D communications are carried out between UEs 115 without the involvement of a base station 105.

Base stations 105 may communicate with the core network 130 and with one another. For example, base stations 105 may interface with the core network 130 through backhaul links 132 (e.g., via an S1, N2, N3, or other interface). Base stations 105 may communicate with one another over backhaul links 134 (e.g., via an X2, Xn, or other interface) either directly (e.g., directly between base stations 105) or indirectly (e.g., via core network 130).

The core network 130 may provide user authentication, access authorization, tracking, Internet Protocol (IP) connectivity, and other access, routing, or mobility functions. The core network 130 may be an evolved packet core (EPC), which may include at least one mobility management entity (MME), at least one serving gateway (S-GW), and at least one Packet Data Network (PDN) gateway (P-GW). The MME may manage non-access stratum (e.g., control plane) functions such as mobility, authentication, and bearer management for UEs 115 served by base stations 105 associated with the EPC. User IP packets may be transferred through the S-GW, which itself may be connected to the P-GW. The P-GW may provide IP address allocation as well as other functions. The P-GW may be connected to the network operators IP services. The operators IP services may include access to the Internet, Intranet(s), an IP Multimedia Subsystem (IMS), or a Packet-Switched (PS) Streaming Service.

At least some of the network devices, such as a base station 105, may include subcomponents such as an access network entity, which may be an example of an access node controller (ANC). Each access network entity may communicate with UEs 115 through a number of other access network transmission entities, which may be referred to as a radio head, a smart radio head, or a transmission/reception point (TRP). In some configurations, various functions of each access network entity or base station 105 may be distributed across various network devices (e.g., radio heads and access network controllers) or consolidated into a single network device (e.g., a base station 105).

Wireless communication system 100 may operate using one or more frequency bands, typically in the range of 300 megahertz (MHz) to 300 gigahertz (GHz). Generally, the region from 300 MHz to 3 GHz is known as the ultra-high frequency (UHF) region or decimeter band, since the wavelengths range from approximately one decimeter to one meter in length. UHF waves may be blocked or redirected by buildings and environmental features. However, the waves may penetrate structures sufficiently for a macro cell to provide service to UEs 115 located indoors. Transmission of UHF waves may be associated with smaller antennas and shorter range (e.g., less than 100 km) compared to transmission using the smaller frequencies and longer waves of the high frequency (HF) or very high frequency (VHF) portion of the spectrum below 300 MHz.

Wireless communication system 100 may also operate in a super high frequency (SHF) region using frequency bands from 3 GHz to 30 GHz, also known as the centimeter band. The SHF region includes bands such as the 5 GHz industrial, scientific, and medical (ISM) bands, which may be used opportunistically by devices that may be capable of tolerating interference from other users.

Wireless communication system 100 may also operate in an extremely high frequency (EHF) region of the spectrum (e.g., from 30 GHz to 300 GHz), also known as the millimeter band. In some examples, wireless communication system 100 may support millimeter wave (mmW) communications between UEs 115 and base stations 105, and EHF antennas of the respective devices may be even smaller and more closely spaced than UHF antennas. In some cases, this may facilitate use of antenna arrays within a UE 115. However, the propagation of EHF transmissions may be subject to even greater atmospheric attenuation and shorter range than SHF or UHF transmissions. Techniques disclosed herein may be employed across transmissions that use one or more different frequency regions, and designated use of bands across these frequency regions may differ by country or regulating body.

In some cases, wireless communication system 100 may utilize both licensed and unlicensed radio frequency spectrum bands. For example, wireless communication system 100 may employ License Assisted Access (LAA), LTE-Unlicensed (LTE-U) radio access technology, or NR technology in an unlicensed band such as the 5 GHz ISM band. When operating in unlicensed radio frequency spectrum bands, wireless devices such as base stations 105 and UEs 115 may employ listen-before-talk (LBT) procedures to ensure a frequency channel is clear before transmitting data. In some cases, operations in unlicensed bands may be based on a carrier aggregation configuration in conjunction with component carriers operating in a licensed band (e.g., LAA). Operations in unlicensed spectrum may include downlink transmissions, uplink transmissions, peer-to-peer transmissions, or a combination of these. Duplexing in unlicensed spectrum may be based on frequency division duplexing (FDD), time division duplexing (TDD), or a combination of both.

In some examples, base station 105 or UE 115 may be equipped with multiple antennas, which may be used to employ techniques such as transmit diversity, receive diversity, multiple-input multiple-output (MIMO) communications, or beamforming. For example, wireless communication system 100 may use a transmission scheme between a transmitting device (e.g., a base station 105) and a receiving device (e.g., a UE 115), where the transmitting device is equipped with multiple antennas and the receiving device is equipped with one or more antennas. MIMO communications may employ multipath signal propagation to increase the spectral efficiency by transmitting or receiving multiple signals via different spatial layers, which may be referred to as spatial multiplexing. The multiple signals may, for example, be transmitted by the transmitting device via different antennas or different combinations of antennas. Likewise, the multiple signals may be received by the receiving device via different antennas or different combinations of antennas. Each of the multiple signals may be referred to as a separate spatial stream, and may carry bits associated with the same data stream (e.g., the same codeword) or different data streams. Different spatial layers may be associated with different antenna ports used for channel measurement and reporting. MIMO techniques include single-user MIMO (SU-MIMO) where multiple spatial layers are transmitted to the same receiving device, and multiple-user MIMO (MU-MIMO) where multiple spatial layers are transmitted to multiple devices.

Beamforming, which may also be referred to as spatial filtering, directional transmission, or directional reception, is a signal processing technique that may be used at a transmitting device or a receiving device (e.g., a base station 105 or a UE 115) to shape or steer an antenna beam (e.g., a transmit beam or receive beam) along a spatial path between the transmitting device and the receiving device. Beamforming may be achieved by combining the signals communicated via antenna elements of an antenna array such that signals propagating at particular orientations with respect to an antenna array experience constructive interference while others experience destructive interference. The adjustment of signals communicated via the antenna elements may include a transmitting device or a receiving device applying certain amplitude and phase offsets to signals carried via each of the antenna elements associated with the device. The adjustments associated with each of the antenna elements may be defined by a beamforming weight set associated with a particular orientation (e.g., with respect to the antenna array of the transmitting device or receiving device, or with respect to some other orientation).

In one example, a base station 105 may use multiple antennas or antenna arrays to conduct beamforming operations for directional communications with a UE 115. For instance, some signals (e.g. synchronization signals, reference signals, beam selection signals, or other control signals) may be transmitted by a base station 105 multiple times in different directions, which may include a signal being transmitted according to different beamforming weight sets associated with different directions of transmission. Transmissions in different beam directions may be used to identify (e.g., by the base station 105 or a receiving device, such as a UE 115) a beam direction for subsequent transmission and/or reception by the base station 105.

Some signals, such as data signals associated with a particular receiving device, may be transmitted by a base station 105 in a single beam direction (e.g., a direction associated with the receiving device, such as a UE 115). In some examples, the beam direction associated with transmissions along a single beam direction may be determined based at least in in part on a signal that was transmitted in different beam directions. For example, a UE 115 may receive one or more of the signals transmitted by the base station 105 in different directions, and the UE 115 may report to the base station 105 an indication of the signal it received with a highest signal quality, or an otherwise acceptable signal quality. Although these techniques are described with reference to signals transmitted in one or more directions by a base station 105, a UE 115 may employ similar techniques for transmitting signals multiple times in different directions (e.g., for identifying a beam direction for subsequent transmission or reception by the UE 115), or transmitting a signal in a single direction (e.g., for transmitting data to a receiving device).

A receiving device (e.g., a UE 115, which may be an example of a mmW receiving device) may try multiple receive beams when receiving various signals from the base station 105, such as synchronization signals, reference signals, beam selection signals, or other control signals. For example, a receiving device may try multiple receive directions by receiving via different antenna subarrays, by processing received signals according to different antenna subarrays, by receiving according to different receive beamforming weight sets applied to signals received at a plurality of antenna elements of an antenna array, or by processing received signals according to different receive beamforming weight sets applied to signals received at a plurality of antenna elements of an antenna array, any of which may be referred to as "listening" according to different receive beams or receive directions. In some examples a receiving device may use a single receive beam to receive along a single beam direction (e.g., when receiving a data signal). The single receive beam may be aligned in a beam direction determined based at least in part on listening according to different receive beam directions (e.g., a beam direction determined to have a highest signal strength, highest signal-to-noise ratio, or otherwise acceptable signal quality based at least in part on listening according to multiple beam directions).

In some cases, the antennas of a base station 105 or UE 115 may be located within one or more antenna arrays, which may support MIMO operations, or transmit or receive beamforming. For example, one or more base station antennas or antenna arrays may be co-located at an antenna assembly, such as an antenna tower. In some cases, antennas or antenna arrays associated with a base station 105 may be located in diverse geographic locations. A base station 105 may have an antenna array with a number of rows and columns of antenna ports that the base station 105 may use to support beamforming of communications with a UE 115. Likewise, a UE 115 may have one or more antenna arrays that may support various MIMO or beamforming operations.

In some cases, wireless communication system 100 may be a packet-based network that operate according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use hybrid automatic repeat request (HARQ) to provide retransmission at the MAC layer to improve link efficiency. In the control plane, the Radio Resource Control (RRC) protocol layer may provide establishment, configuration, and maintenance of an RRC connection between a UE 115 and a base station 105 or core network 130 supporting radio bearers for user plane data. At the Physical layer, transport channels may be mapped to physical channels.

In some cases, UEs 115 and base stations 105 may support retransmissions of data to increase the likelihood that data is received successfully. HARQ feedback is one technique of increasing the likelihood that data is received correctly over a communication link 125. HARQ may include a combination of error detection (e.g., using a cyclic redundancy check (CRC)), forward error correction (FEC), and retransmission (e.g., automatic repeat request (ARQ)). HARQ may improve throughput at the MAC layer in poor radio conditions (e.g., signal-to-noise conditions). In some cases, a wireless device may support same-slot HARQ feedback, where the device may provide HARQ feedback in a specific slot for data received in a previous symbol in the slot. In other cases, the device may provide HARQ feedback in a subsequent slot, or according to some other time interval.

Time intervals in LTE or NR may be expressed in multiples of a basic time unit, which may, for example, refer to a sampling period of Tₛ = 1/30,720,000 seconds. Time intervals of a communications resource may be organized according to radio frames each having a duration of 10 milliseconds (ms), where the frame period may be expressed as T_{f} = 307,200 Tₛ. The radio frames may be identified by a system frame number (SFN) ranging from 0 to 1023. Each frame may include 10 subframes numbered from 0 to 9, and each subframe may have a duration of 1 ms. A subframe may be further divided into 2 slots each having a duration of 0.5 ms, and each slot may contain 6 or 7 modulation symbol periods (e.g., depending on the length of the cyclic prefix prepended to each symbol period). Excluding the cyclic prefix, each symbol period may contain 2048 sampling periods. In some cases, a subframe may be the smallest scheduling unit of the wireless communication system 100, and may be referred to as a transmission time interval (TTI). In other cases, a smallest scheduling unit of the wireless communication system 100 may be shorter than a subframe or may be dynamically selected (e.g., in bursts of shortened TTIs (sTTIs) or in selected component carriers using sTTIs).

In some wireless communication systems, a slot may further be divided into multiple mini-slots containing one or more symbols. In some instances, a symbol of a mini-slot or a mini-slot may be the smallest unit of scheduling. Each symbol may vary in duration depending on the subcarrier spacing or frequency band of operation, for example. Further, some wireless communication systems may implement slot aggregation in which multiple slots or mini-slots are aggregated together and used for communication between a UE 115 and a base station 105.

The term "carrier" refers to a set of radio frequency spectrum resources having a defined physical layer structure for supporting communications over a communication link 125. For example, a carrier of a communication link 125 may include a portion of a radio frequency spectrum band that is operated according to physical layer channels for a given radio access technology. Each physical layer channel may carry user data, control information, or other signaling. A carrier may be associated with a pre-defined frequency channel (e.g., an evolved universal mobile telecommunication system terrestrial radio access (E-UTRA) absolute radio frequency channel number (EARFCN)), and may be positioned according to a channel raster for discovery by UEs 115. Carriers may be downlink or uplink (e.g., in an FDD mode), or be configured to carry downlink and uplink communications (e.g., in a TDD mode). In some examples, signal waveforms transmitted over a carrier may be made up of multiple sub-carriers (e.g., using multi-carrier modulation (MCM) techniques such as orthogonal frequency division multiplexing (OFDM) or discrete Fourier transform spread OFDM (DFT-S-OFDM)).

The organizational structure of the carriers may be different for different radio access technologies (e.g., LTE, LTE-A, LTE-A Pro, NR). For example, communications over a carrier may be organized according to TTIs or slots, each of which may include user data as well as control information or signaling to support decoding the user data. A carrier may also include dedicated acquisition signaling (e.g., synchronization signals or system information, etc.) and control signaling that coordinates operation for the carrier. In some examples (e.g., in a carrier aggregation configuration), a carrier may also have acquisition signaling or control signaling that coordinates operations for other carriers.

Physical channels may be multiplexed on a carrier according to various techniques. A physical control channel and a physical data channel may be multiplexed on a downlink carrier, for example, using time division multiplexing (TDM) techniques, frequency division multiplexing (FDM) techniques, or hybrid TDM-FDM techniques. In some examples, control information transmitted in a physical control channel may be distributed between different control regions in a cascaded manner (e.g., between a common control region or common search space and one or more UE-specific control regions or UE-specific search spaces).

A carrier may be associated with a particular bandwidth of the radio frequency spectrum, and in some examples the carrier bandwidth may be referred to as a "system bandwidth" of the carrier or the wireless communication system 100. For example, the carrier bandwidth may be one of a number of predetermined bandwidths for carriers of a particular radio access technology (e.g., 1.4, 3, 5, 10, 15, 20, 40, or 80 MHz). In some examples, each served UE 115 may be configured for operating over portions or all of the carrier bandwidth. In other examples, some UEs 115 may be configured for operation using a narrowband protocol type that is associated with a predefined portion or range (e.g., set of subcarriers or RBs) within a carrier (e.g., "in-band" deployment of a narrowband protocol type).

In a system employing MCM techniques, a resource element may consist of one symbol period (e.g., a duration of one modulation symbol) and one subcarrier, where the symbol period and subcarrier spacing are inversely related. The number of bits carried by each resource element may depend on the modulation scheme (e.g., the order of the modulation scheme). Thus, the more resource elements that a UE 115 receives and the higher the order of the modulation scheme, the higher the data rate may be for the UE 115. In MIMO systems, a wireless communications resource may refer to a combination of a radio frequency spectrum resource, a time resource, and a spatial resource (e.g., spatial layers), and the use of multiple spatial layers may further increase the data rate for communications with a UE 115.

Devices of the wireless communication system 100 (e.g., base stations 105 or UEs 115) may have a hardware configuration that supports communications over a particular carrier bandwidth, or may be configurable to support communications over one of a set of carrier bandwidths. In some examples, the wireless communication system 100 may include base stations 105 and/or UEs 115 that support simultaneous communications via carriers associated with more than one different carrier bandwidth.

Wireless communication system 100 may support communication with a UE 115 on multiple cells or carriers, a feature which may be referred to as carrier aggregation or multi-carrier operation. A UE 115 may be configured with multiple downlink component carriers and one or more uplink component carriers according to a carrier aggregation configuration. Carrier aggregation may be used with both FDD and TDD component carriers.

In some cases, wireless communication system 100 may utilize enhanced component carriers (eCCs). An eCC may be characterized by one or more features including wider carrier or frequency channel bandwidth, shorter symbol duration, shorter TTI duration, or modified control channel configuration. In some cases, an eCC may be associated with a carrier aggregation configuration or a dual connectivity configuration (e.g., when multiple serving cells have a suboptimal or non-ideal backhaul link). An eCC may also be configured for use in unlicensed spectrum or shared spectrum (e.g., where more than one operator is allowed to use the spectrum). An eCC characterized by wide carrier bandwidth may include one or more segments that may be utilized by UEs 115 that are not capable of monitoring the whole carrier bandwidth or are otherwise configured to use a limited carrier bandwidth (e.g., to conserve power).

In some cases, an eCC may utilize a different symbol duration than other component carriers, which may include use of a reduced symbol duration as compared with symbol durations of the other component carriers. A shorter symbol duration may be associated with increased spacing between adjacent subcarriers. A device, such as a UE 115 or base station 105, utilizing eCCs may transmit wideband signals (e.g., according to frequency channel or carrier bandwidths of 20, 40, 60, 80 MHz, etc.) at reduced symbol durations (e.g., 16.67 microseconds). A TTI in eCC may consist of one or multiple symbol periods. In some cases, the TTI duration (that is, the number of symbol periods in a TTI) may be variable.

Wireless communication system 100 may be an NR system that may utilize any combination of licensed, shared, and unlicensed spectrum bands, among others. The flexibility of eCC symbol duration and subcarrier spacing may allow for the use of eCC across multiple spectrums. In some examples, NR shared spectrum may increase spectrum utilization and spectral efficiency, specifically through dynamic vertical (e.g., across the frequency domain) and horizontal (e.g., across the time domain) sharing of resources.

In some aspects, a UE 115 may receive a plurality of downlink grants for a corresponding plurality of data transmissions, wherein each downlink grant identifies resources for receiving the corresponding data transmission and indicates whether the corresponding data transmission comprises a last data transmission for a reporting occasion. The UE 115 may determine, based at least in part on the received downlink grants, that a last downlink grant for the last data transmission associated with the reporting occasion was not received. The UE 115 may transmit a feedback report during the reporting occasion, wherein a format of the feedback report is based at least in part on the last downlink grant for the last data transmission not being received.

In some aspects, a base station 105 may transmit a plurality of downlink grant for a corresponding plurality of data transmissions, each downlink grant identifying resources for receiving the corresponding data transmission and indicating whether the corresponding data transmission comprises a last data transmission for a reporting occasion. The base station 105 may receive a feedback report during the reporting occasion, wherein a format of the feedback report is based at least in part on whether a last downlink grant for the last data transmission associated with the reporting occasion was received.

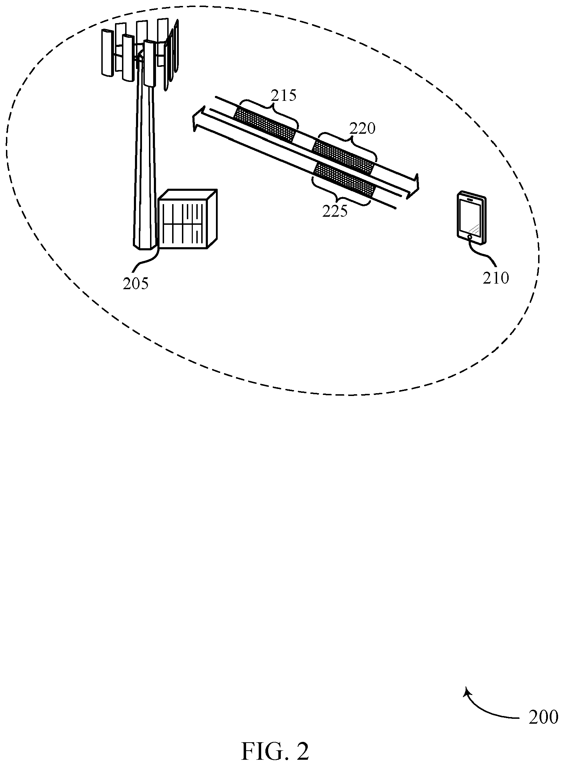

**FIG. 2** illustrates an example of a wireless communication system 200 that supports uplink control channel codebook design in NR unlicensed in accordance with aspects of the present disclosure. In some examples, wireless communication system 200 may implement aspects of wireless communication system 100. Aspects of wireless communication system 200 may be implemented by base station 205 and/or UE 210, which may be examples of the corresponding devices described herein. In some aspects, wireless communication system 200 may operate in an unlicensed or shared radio frequency spectrum band.

Wireless networks typically support use of the codebook to construct ACK/NACK information in a feedback report during a reporting occasion. The codebook design may include a type 1 codebook used for semi-statically configured downlink data transmissions or a type 2 codebook used for dynamically configured downlink data transmissions. Broadly, the codebook design is used by UE 210 to configure the format for the feedback report. Generally, the format may include one or more bits of the feedback report corresponding to each downlink data transmission being reported in the feedback report. Typically, UE 210 would construct the codebook based on candidate data transmissions (e.g., PDSCH transmissions) that are configured dynamically. In some aspects, a semi-persistent schedule (SPS) PDSCH reception, which is RRC configured and DCI activated, may be considered or otherwise counted as one PDSCH candidate.

Conventionally, UE 210 may identify, determine, or otherwise derive valid PDSCH candidates within a particular window, such as a channel occupancy time. For a serving cell that configures code block group (CBG) based HARQ feedback, HARQ-ACKs for potential PDSCH candidates are padded to have the same size (e.g., an RRC configured parameter associated with the maximum number of CBGs in a transport block (TB)). The size may be different across different component carriers (CCs), bandwidth parts (BWPs), and the like, which may generally be referred to as CC/DL-BWP. The base station (e.g., base station 205) may poll a specific HARQ process only when the HARQ codebook is multiplexed with PUSCH, e.g., the signaling may utilize a special downlink assignment index (DAI) bit in the uplink DCI to indicate such a combination.

UE 210 may design the type 2 codebook (e.g., dynamic) for DCI based scheduling and/or SPS PDSCH release. For example, when UE 210 detects a downlink grant (e.g., DCI), UE 210 may assume, allocate, or otherwise configure, a position (e.g., one or more bits) for such HARQ-ACK in the PUCCH codebook. In some aspects, UE 210 may group ACK/NACK information (e.g., the feedback state) according to the following order. Sub-codebook one may be constructed first and based on non-CBG-based ACK/NACK (e.g., for CC(s)/DL-BWP(s) configured with non-CBG ACK/NACK reporting), with UE 210 going by CC first and PDCCH occasion (e.g., slot) next. UE 210 may append any SPS PDSCH reception data transmission(s) to the end of sub-codebook one. UE 210 may then construct sub-codebook two using CBG based CC(s)/DL-BWP(s) next. For example, UE 210 may provide ACK/NACK information for CBG-based CC(s)/DL-BWP(s) in sub-codebook two, going by CC first and PDCCH occasion (e.g., slot) next. In some aspects, the size (e.g., format) of each CBG-based data transmission in sub-codebook two may be the same across CC(s)/DL-BWP(s), regardless of the RRC configured parameter, e.g., regardless of the maximum number of CBGs per transport block and the number of transport blocks in a CC/DL-BWP, using padding.

Such conventional codebook design techniques are typically utilized in a licensed radio frequency spectrum band. For example, a type two codebook (e.g., dynamic) may be defined for PUCCH (e.g., an uplink reporting occasion) to encode ACK/NACK for the active CC(s)/DL-BWP(s). However, such techniques may be insufficient or otherwise disrupt wireless communications when operating in an unlicensed or shared radio frequency spectrum band. In that context, transmissions may be subject to LBT procedures, which may not always be successful. For example, the base station (e.g., base station 205) may check out the CC (e.g., have a successful LBT procedure) or fail to check out the CC (e.g., have an unsuccessful LBT procedure), which UE 210 is not aware of ahead of time. Such conventional codebook designs may be considered conservative, with no ambiguity, but may waste a lot of bits due to LBT uncertainty of the CC/DL-BWP. Accordingly, aspects of the described techniques provide proposals for modifying a type 2 codebook design for PUCCH in an NR unlicensed radio frequency spectrum band.

Broadly, aspects of the described techniques may include base station 205 adding one or more bits in downlink grants indicating whether the corresponding data transmission is a last data transmission for a particular reporting occasion. For example, base station 205 may add one bit to each downlink grant before the last downlink grant to carry or otherwise convey an indication that the downlink grants are not the last downlink grants for a last data transmission. However, for the last downlink grant associated with reporting occasion (e.g. PUCCH), base station 205 may include one bit that is set or otherwise configured to carry or otherwise convey an indication that the downlink grant corresponds to a last data transmission for the reporting occasion. In another example, base station 205 may include two or more bits in each of the downlink grants, with the two or more bits configured on a per downlink grant basis to indicate whether the downlink grant is within a certain number of downlink grants from the last downlink grant. For example, base station 205 may add the two or more bits in the downlink grants to countdown to the last downlink grant corresponding to the last data transmission. As one example, base station 205 may use two bits in each downlink grant, with the two bits set to "11" in all downlink grants except for the last three downlink grants. In the last three downlink grants, base station 205 may configure the two bits as 10, 01, and 00, respectively, to provide a mechanism for UE 210 to identify the last downlink grant for the reporting occasion.

In some aspects, base station 205 may divide the data transmissions for the reporting occasions between CBG configured data transmissions and non-CBG configured data transmissions. For example, at least some (e.g., a first set) of the data transmissions may be CBG configured, with the remaining (e.g., a second set) of the data transmissions being non-CBG configured data transmissions. Accordingly, base station 205 may set or otherwise configure the one or more bits in the downlink grants for each of the CBG configured data transmissions to identify or otherwise convey an indication of which data transmission is the last CBG configured data transmission for the reporting occasion. Similarly, base station 205 may set or otherwise configure one or more bits in a downlink grants for each of the non-CBG configured data transmissions to identify or otherwise convey an indication of which data transmission is the last non-CBG configured data transmission for the reporting occasion. Again, base station 205 may use one bit in the downlink grants for the CBG configured data transmissions to identify the last CBG configured data transmission, or may use two or more bits in the downlink grants for the CBG configured data transmissions to count down to the last CBG configured data transmission (e.g., to identify the last three downlink grants). Similarly, base station 205 may use one bit or two or more bits in the downlink grants for the non-CBG configured data transmissions to convey an indication of which data transmission is last among the non-CBG configured data transmissions for the reporting occasion.

Accordingly, LTE 210 may construct a type two codebook based on the indication of whether a downlink grant corresponds to a last data transmission for the reporting occasion. For example, UE 210 may configure or otherwise select the format for the feedback report using the type two codebook based on determining whether or not UE 210 received the last downlink grant corresponding to the last data transmission (e.g., either among all data transmissions for the reporting occasion, or between CBG configured and non-CBG configured data transmissions). That is, UE 210 may select a payload size of the type two codebook based on the number of data transmissions received for the reporting occasion. UE 210 may use the indication carried or conveyed in the downlink grants to determine whether the last downlink grant for the last data transmission was received. If the last downlink grant was received (as determined by the one or more bits), UE 210 may select a format for the type two codebook to use for the feedback report that includes one or more bits allocated to convey ACK/NACK information for the last data transmission. If the last downlink grant was not received (as determined by the one or bits), UE 210 may select a format for the type two codebook to use for the feedback report that does not include bits allocated to convey ACK/NACK information for the last data transmission. As discussed above, UE 210 may construct or otherwise select the format for the type two codebook using sub-codebook one for non-CBG configured data transmissions and sub-codebook two for CBG configured data transmissions. Accordingly, in some examples the one or more bits indicated in the downlink grants may be unique to CBG configured data transmissions, and may also be unique to non-CBG configured data transmissions.

Thus, base station 205 may add N more bits in the downlink grant to indicate the last 2^{N} - 1 downlink grants for this ACK/NACK (e.g., for this reporting occasion), where N is one or more bits. UE 210 may know that it misses the last 2^{N} - 1 downlink grants based on the N more bits indicated in the received downlink grants.

Accordingly, UE 210 may use the downlink grants that were actually received to determine (based on the one or more bits indicated in each downlink grant) whether the last downlink grant for the last data transmission for the reporting occasion was received. UE 210 may configure the feedback report based on this determination, and transmit or otherwise provide the feedback report to base station 205 during the reporting occasion.

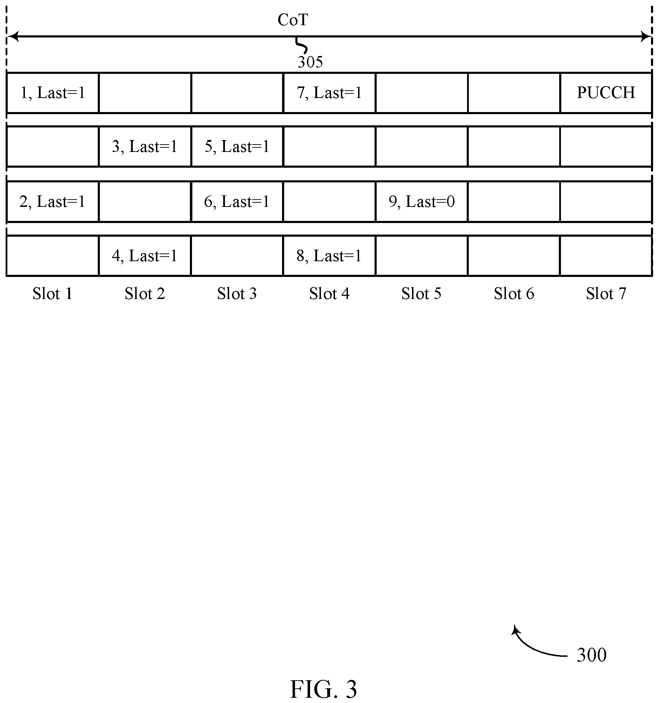

**FIG. 3** illustrates an example of a timeline 300 that supports uplink control channel codebook design in NR unlicensed in accordance with aspects of the present disclosure. In some examples, timeline 300 may implement aspects of wireless communication systems 100 and/or 200. Aspects of timeline 300 may be implemented by a base station and/or UE, which may be examples of corresponding devices described herein. Generally, timeline 300 illustrates one example of how the one or more bits indicated in the downlink grants may be used to identify the last downlink grant corresponding to the last data transmission for a reporting occasion.

As discussed above, the base station may transmit a plurality of downlink transmissions to the UE. Generally, each downlink transmission may have a corresponding downlink grant identifying resources for the downlink transmission and identifying the reporting occasion for the UE to use to provide the feedback report for the data transmission. In some aspects, the feedback report (e.g., PUCCH) may be associated with a window in which the data transmissions are received. In the example timeline 300, the window may refer to channel occupancy time 305, which may be utilized when the base station and UE are operating in a shared or unlicensed radio frequency spectrum band. For example, the base station may perform an LBT procedure on one or more channels (e.g., CC(s)/DL-BWP(s)), and capture the channel for the channel occupancy time 305. The channel occupancy time 305 may be used perform uplink and/or downlink communications between the base station and UE.

In some aspects, the base station may transmit a downlink grant for each corresponding data transmission occurring during the channel occupancy time 305. In the example illustrated in timeline 300, the base station may configure one bit in each of the downlink grants to indicate whether the downlink grant is a last downlink grant corresponding to a last data transmission for the reporting occasion. For example, the base station may set the one bit (e.g., "Last") to "1" in each of downlink grants 1-8 and set the one bit to "0" in downlink grant 9 to indicate to the UE that downlink grant 9 is the last downlink grant corresponding to the last data transmission for the reporting occasion (e.g., PUCCH). The UE may receive each of the downlink grants corresponding to the data transmissions for the reporting occasion, and determine whether or not downlink grant 9 was received.

For example, the UE may receive downlink grants 1-9 and use the one bit to determine (e.g., based on the one bit indicated in each received downlink grant) that the last downlink grant corresponding to the last data transmission for the reporting occasion was received. The UE may select the format, or otherwise construct the type two codebook based on this determination.

In another example, the UE may receive downlink grants 1-8, but may determine (e.g., based on the one bit indicated in each received downlink grant) that downlink grant 9 was not received. Accordingly, the UE may determine that the last downlink grant for the last data transmission of the reporting occasion was not received. The UE may select the format, or otherwise construct the type two codebook based on this determination.

As discussed above, the base station may configure the one bit within the downlink grants based on whether or not the corresponding data transmission is CBG configured or non-CBG configured. That is, the base station may set the one bit to "0" in the last downlink grant corresponding to the last CBG configured data transmission to indicate or otherwise identify the downlink grant as a last downlink grant among the CBG configured data transmissions. Similarly, the base station may set the one bit to "0" in the last downlink grant corresponding to the last non-CBG configured data transmission to indicate or otherwise identify the downlink grant as a last downlink grant among the non-CBG configured data transmissions. Accordingly, the UE may determine whether or not the last downlink grant for the last CBG configured data transmissions for the reporting occasion was received and, similarly, determine whether or not the last downlink grant for the last non-CBG configured data transmissions for the reporting occasion was received. UE 210 may construct the type two codebook (e.g., sub-codebook one and sub-codebook two) based on these determinations.

Accordingly, the UE may configure or otherwise select the format for the type two codebook used for constructing the feedback report, and transmit or otherwise provide an indication of the feedback report to the base station during the corresponding reporting occasion (e.g., PUCCH in slot 7).

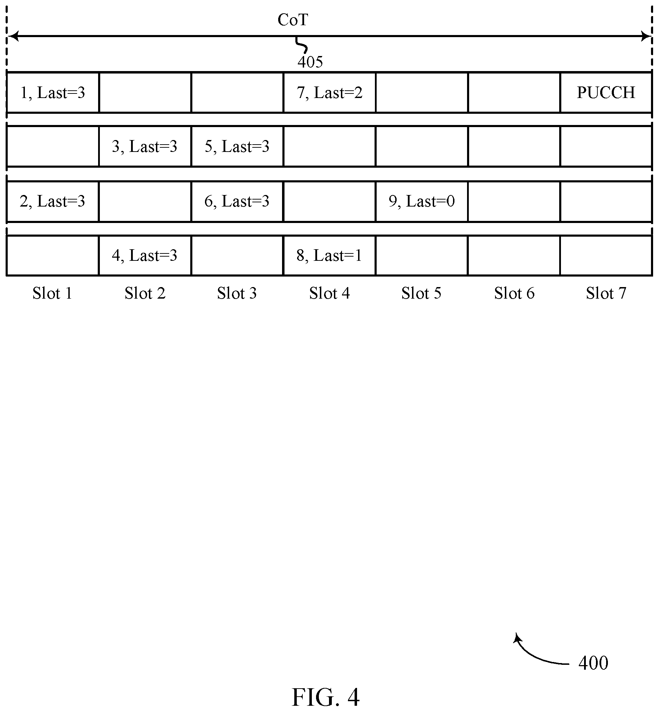

**FIG. 4** illustrates an example of a timeline 400 that supports uplink control channel codebook design in NR unlicensed in accordance with aspects of the present disclosure. In some examples, timeline 400 may implement aspects of wireless communication systems 100 and/or 200. Aspects of timeline 400 may be implemented by a base station and/or UE, which may be examples of corresponding devices described herein. Generally, timeline 400 illustrates one example of how the one or more bits indicated in the downlink grants may be used to identify the last downlink grant corresponding to the last data transmission for a reporting occasion.

As discussed above, the base station may transmit a plurality of downlink transmissions to the UE. Generally, each downlink transmission may have a corresponding downlink grant identifying resources for the downlink transmission and identifying the reporting occasion for the UE to use to provide the feedback report for the data transmission. In some aspects, the feedback report (e.g., PUCCH) may be associated with a window in which the data transmissions are received. In the example timeline 400, the window may refer to channel occupancy time 405, which may be utilized when the base station and UE are operating in a shared or unlicensed radio frequency spectrum band. For example, the base station may perform an LBT procedure on one or more channels (e.g., CC(s)/DL-BWP(s)), and capture the channel for the channel occupancy time 405. The channel occupancy time 405 may be used perform uplink and/or downlink communications between the base station and UE.

In some aspects, the base station may transmit a downlink grant for each corresponding data transmission occurring during the channel occupancy time 405. In the example illustrated in timeline 400, the base station may configure two bits in each of the downlink grants to indicate whether the downlink grant is a last downlink grant corresponding to a last data transmission for the reporting occasion, e.g., to count down to the last downlink grant. For example, the base station may set the two bits (e.g., "Last") to "11" in each of downlink grants 1-6, set the two bits in downlink grant 7 to "10" and downlink grant 8 to "01" to indicate these downlink grants are within a range (e.g., within 3) of the last data transmission, and set the two bits to "00" in downlink grant 9 to indicate to the UE that downlink grant 9 is the last downlink grant corresponding to the last data transmission for the reporting occasion (e.g., PUCCH). The UE may receive each of the downlink grants corresponding to the data transmissions for the reporting occasion, and determine whether or not downlink grant 9 was received.

For example, the UE may receive downlink grants 1-9 and use the two bits to determine (e.g., based on the bits indicated in each received downlink grant) that the last downlink grant corresponding to the last data transmission for the reporting occasion was received. The UE may select the format, or otherwise construct the type two codebook based on this determination.

In another example, the UE may receive downlink grants 1-8, but may determine (e.g., based on the bits indicated in each received downlink grant) that downlink grant 9 was not received. Accordingly, the UE may determine that the last downlink grant for the last data transmission of the reporting occasion was not received. The UE may select the format, or otherwise construct the type two codebook based on this determination.

As discussed above, the base station may configure the bits within the downlink grants based on whether or not the corresponding data transmission is CBG configured or non-CBG configured. That is, the base station may set the bit to "00" in the last downlink grant corresponding to the last CBG configured data transmission to indicate or otherwise identify the downlink grant as a last downlink grant among the CBG configured data transmissions. Similarly, the base station may set the bit to "00" in the last downlink grant corresponding to the last non-CBG configured data transmission to indicate or otherwise identify the downlink grant as a last downlink grant among the non-CBG configured data transmissions. Accordingly, the UE may determine whether or not the last downlink grant for the last CBG configured data transmissions for the reporting occasion was received and, similarly, determine whether or not the last downlink grant for the last non-CBG configured data transmissions for the reporting occasion was received. The UE may construct the type two codebook (e.g., sub-codebook one and sub-codebook two) based on these determinations.

Accordingly, the UE may configure or otherwise select the format for the type two codebook used for configuring the feedback report, and transmit or otherwise provide an indication of the feedback report during the corresponding reporting occasion (e.g., PUCCH in slot 7).

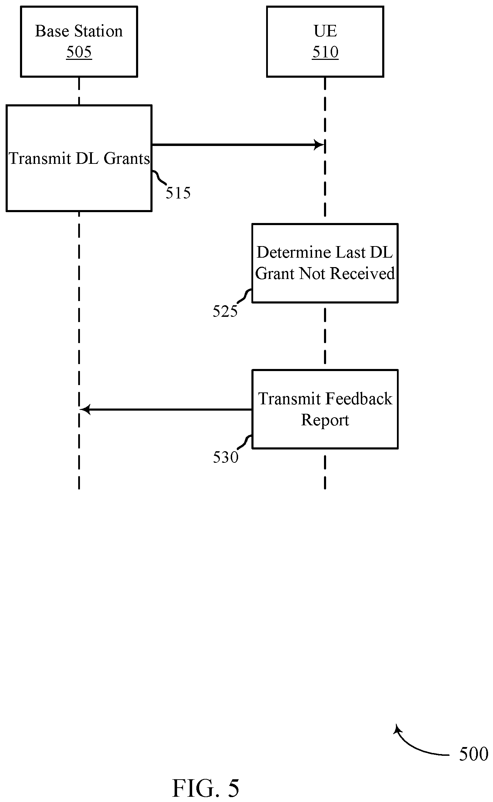

**FIG. 5** illustrates an example of a process 500 that supports uplink control channel codebook design in NR unlicensed in accordance with aspects of the present disclosure. In some examples, process 500 may implement aspects of wireless communication systems 100 and/or 200, and/or timelines 300 and/or 400. Aspects of process 500 may be implemented by base station 505 and/or UE 510, which may be examples of the corresponding devices described herein.

At 515, base station 505 may transmit (and UE 510 may receive) a plurality of downlink grants for a corresponding plurality of data transmissions. In some aspects, each downlink grant may identify resources for receiving the corresponding data transmission and indicate whether the corresponding data transmission is a last data transmission for the reporting occasion. In some aspects, each downlink grant may utilize one or more bits to provide the indication of whether the downlink grant corresponds to a last data transmission for the reporting occasion. In some aspects, the data transmissions may be communicated over an unlicensed or shared radio frequency spectrum band.

In some aspects, some of the data transmissions for the reporting occasion may be CBG configured data transmissions (e.g., a first set), where the other data transmissions for the reporting occasion may be non-CBG configured data transmissions. In this context, each downlink grant may carry or convey an indication of whether it is the last downlink grant for the last CBG configured data transmissions or the last downlink grant for the last non-CBG configured data transmissions. In this context, UE 510 may utilize each of the received downlink grants to determine whether the corresponding data transmission was the last data transmission of the CBG configured data transmissions or the non-CBG configured data transmission.

At 520, UE 510 may use the received downlink grants to identify or otherwise determine whether or not the last downlink grant for the last data transmission of the reporting occasion was received. For example, LTE 510 may determine that the last downlink grant for the last data transmission for the reporting occasion was received, and select a format or otherwise configure a type two codebook to use for generating a feedback report based on this determination. Similarly, UE 510 may determine that the last downlink grant for the last data transmission for the reporting occasion was not received, and select the format or otherwise configure the type two codebook to use for generating a feedback report based on this determination.

At 525, UE 510 may transmit (and base station 505 may receive) the feedback report during the reporting occasion. In some aspects, the format of the feedback report may be based, at least in some aspects, on whether or not the last downlink grant for the last data transmission was received by UE 510. For example, the feedback report may utilize a first format when the last downlink grant for the last data transmission was not received, or use the second format when the last downlink grant for the last data transmission was received.

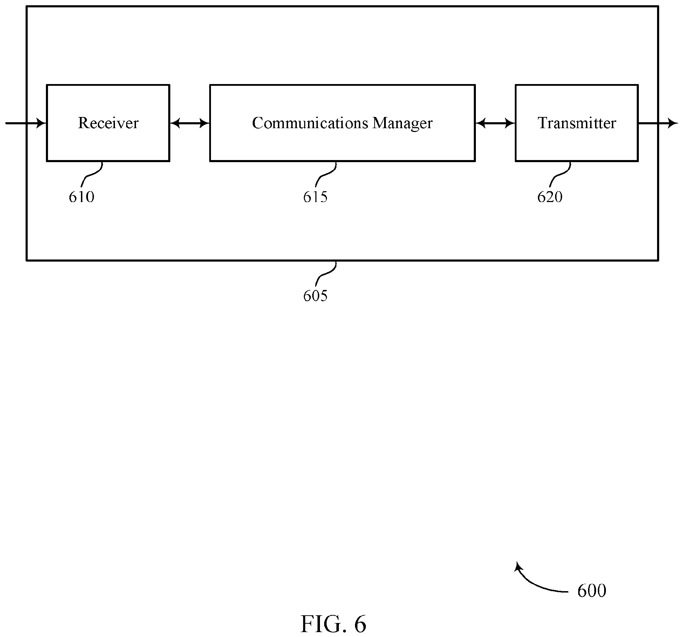

**FIG. 6** shows a block diagram 600 of a device 605 that supports uplink control channel codebook design in NR unlicensed in accordance with aspects of the present disclosure. The device 605 may be an example of aspects of a UE 115 as described herein. The device 605 may include a receiver 610, a communications manager 615, and a transmitter 620. The device 605 may also include a processor. Each of these components may be in communication with one another (e.g., via one or more buses).

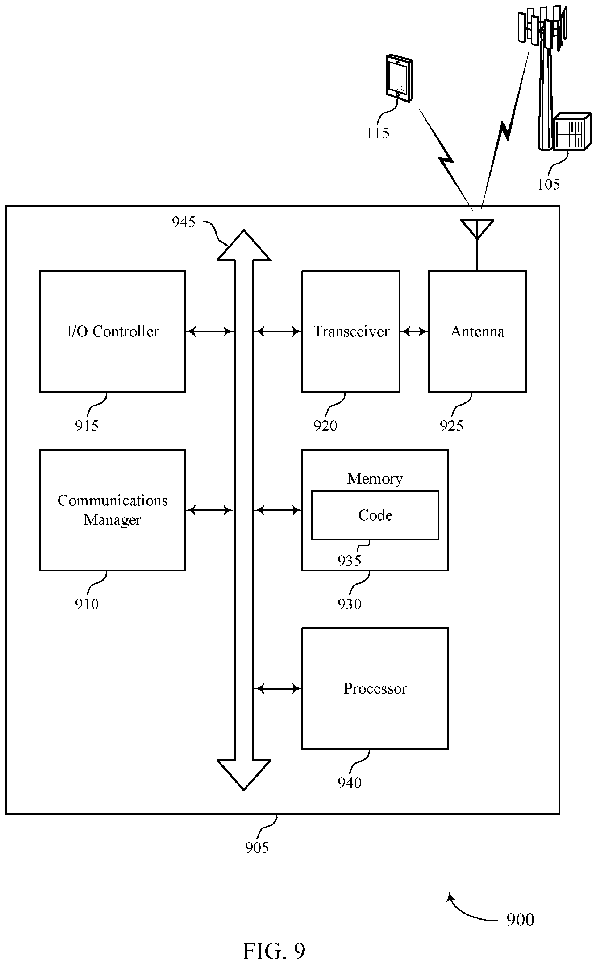

The receiver 610 may receive information such as packets, user data, or control information associated with various information channels (e.g., control channels, data channels, and information related to uplink control channel codebook design in NR unlicensed, etc.). Information may be passed on to other components of the device 605. The receiver 610 may be an example of aspects of the transceiver 920 described with reference to FIG. 9. The receiver 610 may utilize a single antenna or a set of antennas.

The communications manager 615 may receive a set of downlink grants for a corresponding set of data transmissions, where each downlink grant identifies resources for receiving the corresponding data transmission and indicates whether the corresponding data transmission includes a last data transmission for a reporting occasion, determine, based on the received downlink grants, that a last downlink grant for the last data transmission associated with the reporting occasion was not received, and transmit a feedback report during the reporting occasion, where a format of the feedback report is based on the last downlink grant for the last data transmission not being received. The communications manager 615 may be an example of aspects of the communications manager 910 described herein.

The communications manager 615, or its sub-components, may be implemented in hardware, code (e.g., software or firmware) executed by a processor, or any combination thereof. If implemented in code executed by a processor, the functions of the communications manager 615, or its sub-components may be executed by a general-purpose processor, a DSP, an application-specific integrated circuit (ASIC), a FPGA or other programmable logic device, discrete gate or transistor logic, discrete hardware components, or any combination thereof designed to perform the functions described in the present disclosure.

The communications manager 615, or its sub-components, may be physically located at various positions, including being distributed such that portions of functions are implemented at different physical locations by one or more physical components. In some examples, the communications manager 615, or its sub-components, may be a separate and distinct component in accordance with various aspects of the present disclosure. In some examples, the communications manager 615, or its sub-components, may be combined with one or more other hardware components, including but not limited to an input/output (I/O) component, a transceiver, a network server, another computing device, one or more other components described in the present disclosure, or a combination thereof in accordance with various aspects of the present disclosure.

The transmitter 620 may transmit signals generated by other components of the device 605. In some examples, the transmitter 620 may be collocated with a receiver 610 in a transceiver module. For example, the transmitter 620 may be an example of aspects of the transceiver 920 described with reference to FIG. 9. The transmitter 620 may utilize a single antenna or a set of antennas.

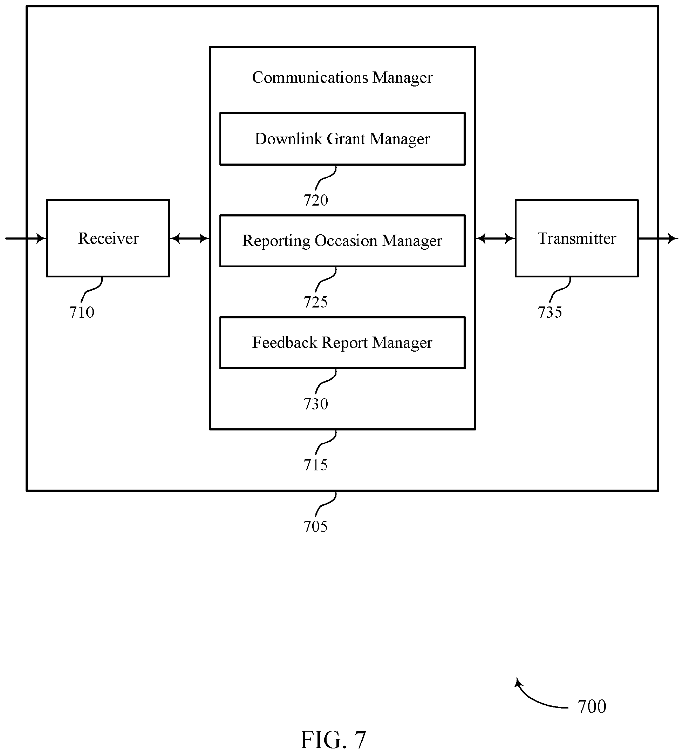

**FIG. 7** shows a block diagram 700 of a device 705 that supports uplink control channel codebook design in NR unlicensed in accordance with aspects of the present disclosure. The device 705 may be an example of aspects of a device 605, or a UE 115 as described herein. The device 705 may include a receiver 710, a communications manager 715, and a transmitter 735. The device 705 may also include a processor. Each of these components may be in communication with one another (e.g., via one or more buses).

The receiver 710 may receive information such as packets, user data, or control information associated with various information channels (e.g., control channels, data channels, and information related to uplink control channel codebook design in NR unlicensed, etc.). Information may be passed on to other components of the device 705. The receiver 710 may be an example of aspects of the transceiver 920 described with reference to FIG. 9. The receiver 710 may utilize a single antenna or a set of antennas.

The communications manager 715 may be an example of aspects of the communications manager 615 as described herein. The communications manager 715 may include a downlink grant manager 720, a reporting occasion manager 725, and a feedback report manager 730. The communications manager 715 may be an example of aspects of the communications manager 910 described herein.

The downlink grant manager 720 may receive a set of downlink grants for a corresponding set of data transmissions, where each downlink grant identifies resources for receiving the corresponding data transmission and indicates whether the corresponding data transmission includes a last data transmission for a reporting occasion.

The reporting occasion manager 725 may determine, based on the received downlink grants, that a last downlink grant for the last data transmission associated with the reporting occasion was not received.

The feedback report manager 730 may transmit a feedback report during the reporting occasion, where a format of the feedback report is based on the last downlink grant for the last data transmission not being received.

The transmitter 735 may transmit signals generated by other components of the device 705. In some examples, the transmitter 735 may be collocated with a receiver 710 in a transceiver module. For example, the transmitter 735 may be an example of aspects of the transceiver 920 described with reference to FIG. 9. The transmitter 735 may utilize a single antenna or a set of antennas.

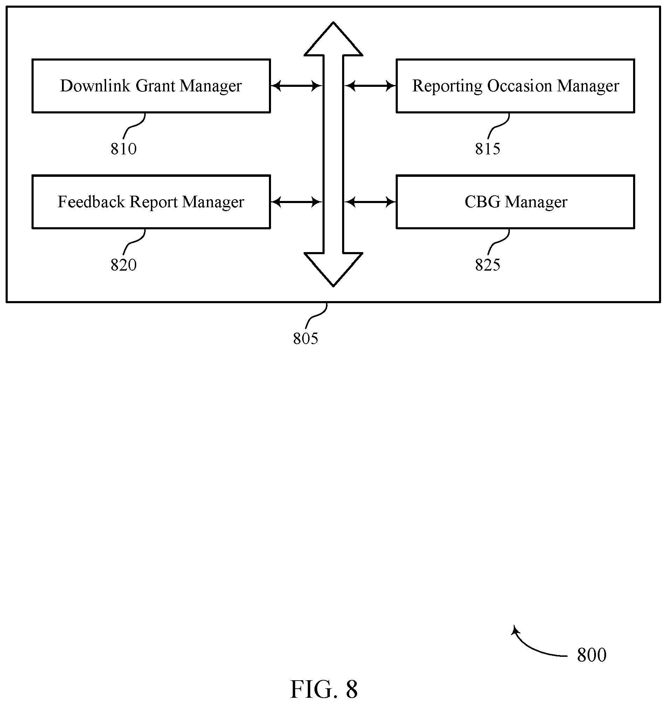

**FIG. 8** shows a block diagram 800 of a communications manager 805 that supports uplink control channel codebook design in NR unlicensed in accordance with aspects of the present disclosure. The communications manager 805 may be an example of aspects of a communications manager 615, a communications manager 715, or a communications manager 910 described herein. The communications manager 805 may include a downlink grant manager 810, a reporting occasion manager 815, a feedback report manager 820, and a CBG manager 825. Each of these modules may communicate, directly or indirectly, with one another (e.g., via one or more buses).

The downlink grant manager 810 may receive a set of downlink grants for a corresponding set of data transmissions, where each downlink grant identifies resources for receiving the corresponding data transmission and indicates whether the corresponding data transmission includes a last data transmission for a reporting occasion. In some cases, the set of data transmissions are communicated over an unlicensed radio frequency spectrum band.

The reporting occasion manager 815 may determine, based on the received downlink grants, that a last downlink grant for the last data transmission associated with the reporting occasion was not received.

The feedback report manager 820 may transmit a feedback report during the reporting occasion, where a format of the feedback report is based on the last downlink grant for the last data transmission not being received. In some examples, the feedback report manager 820 may input a negative acknowledgment feedback state for the last data transmission based on the failure to receive the last downlink grant. In some cases, the feedback report is generated based on the failure to receive the last downlink grant.

The CBG manager 825 may determine, for each of the received downlink grants, whether the corresponding data transmission was the last data transmission of the set of CBG configured data transmissions or the set of non-CBG configured data transmissions. In some cases, the set of data transmissions include a set of CBG configured data transmissions and a set of non-CBG configured data transmissions. In some cases, each of the set of CBG configured data transmissions and the set of non-CBG configured data transmissions includes two or more data transmissions.

**FIG. 9** shows a diagram of a system 900 including a device 905 that supports uplink control channel codebook design in NR unlicensed in accordance with aspects of the present disclosure. The device 905 may be an example of or include the components of device 605, device 705, or a UE 115 as described herein. The device 905 may include components for bi-directional voice and data communications including components for transmitting and receiving communications, including a communications manager 910, an I/O controller 915, a transceiver 920, an antenna 925, memory 930, and a processor 940. These components may be in electronic communication via one or more buses (e.g., bus 945).

The communications manager 910 may receive a set of downlink grants for a corresponding set of data transmissions, where each downlink grant identifies resources for receiving the corresponding data transmission and indicates whether the corresponding data transmission includes a last data transmission for a reporting occasion, determine, based on the received downlink grants, that a last downlink grant for the last data transmission associated with the reporting occasion was not received, and transmit a feedback report during the reporting occasion, where a format of the feedback report is based on the last downlink grant for the last data transmission not being received.

The I/O controller 915 may manage input and output signals for the device 905. The I/O controller 915 may also manage peripherals not integrated into the device 905. In some cases, the I/O controller 915 may represent a physical connection or port to an external peripheral. In some cases, the I/O controller 915 may utilize an operating system such as iOS^{®}, ANDROID^{®}, MS-DOS^{®}, MS-WINDOWS^{®}, OS/2^{®}, UNIX^{®}, LINUX^{®}, or another known operating system. In other cases, the I/O controller 915 may represent or interact with a modem, a keyboard, a mouse, a touchscreen, or a similar device. In some cases, the I/O controller 915 may be implemented as part of a processor. In some cases, a user may interact with the device 905 via the I/O controller 915 or via hardware components controlled by the I/O controller 915.

The transceiver 920 may communicate bi-directionally, via one or more antennas, wired, or wireless links as described above. For example, the transceiver 920 may represent a wireless transceiver and may communicate bi-directionally with another wireless transceiver. The transceiver 920 may also include a modem to modulate the packets and provide the modulated packets to the antennas for transmission, and to demodulate packets received from the antennas.

In some cases, the wireless device may include a single antenna 925. However, in some cases the device may have more than one antenna 925, which may be capable of concurrently transmitting or receiving multiple wireless transmissions.

The memory 930 may include RAM and ROM. The memory 930 may store computer-readable, computer-executable code 935 including instructions that, when executed, cause the processor to perform various functions described herein. In some cases, the memory 930 may contain, among other things, a BIOS which may control basic hardware or software operation such as the interaction with peripheral components or devices.

The processor 940 may include an intelligent hardware device, (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 940 may be configured to operate a memory array using a memory controller. In other cases, a memory controller may be integrated into the processor 940. The processor 940 may be configured to execute computer-readable instructions stored in a memory (e.g., the memory 930) to cause the device 905 to perform various functions (e.g., functions or tasks supporting uplink control channel codebook design in NR unlicensed).

The code 935 may include instructions to implement aspects of the present disclosure, including instructions to support wireless communications. The code 935 may be stored in a non-transitory computer-readable medium such as system memory or other type of memory. In some cases, the code 935 may not be directly executable by the processor 940 but may cause a computer (e.g., when compiled and executed) to perform functions described herein.

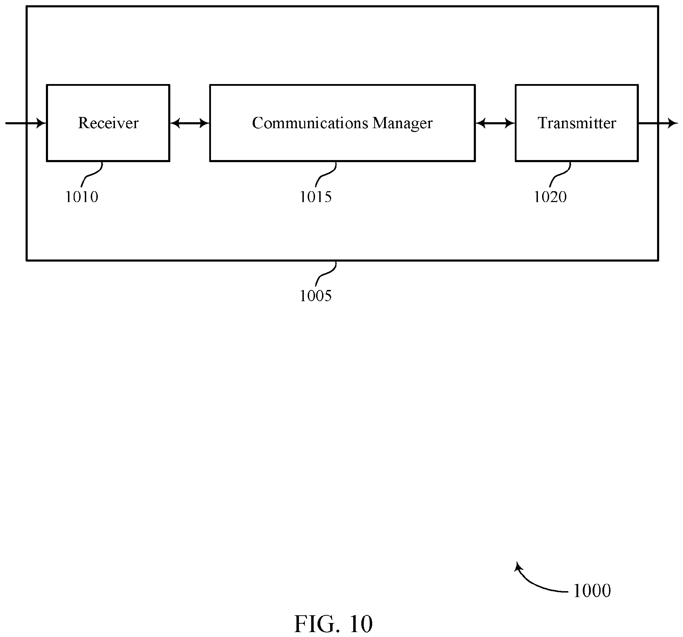

**FIG. 10** shows a block diagram 1000 of a device 1005 that supports uplink control channel codebook design in NR unlicensed in accordance with aspects of the present disclosure. The device 1005 may be an example of aspects of a base station 105 as described herein. The device 1005 may include a receiver 1010, a communications manager 1015, and a transmitter 1020. The device 1005 may also include a processor. Each of these components may be in communication with one another (e.g., via one or more buses).

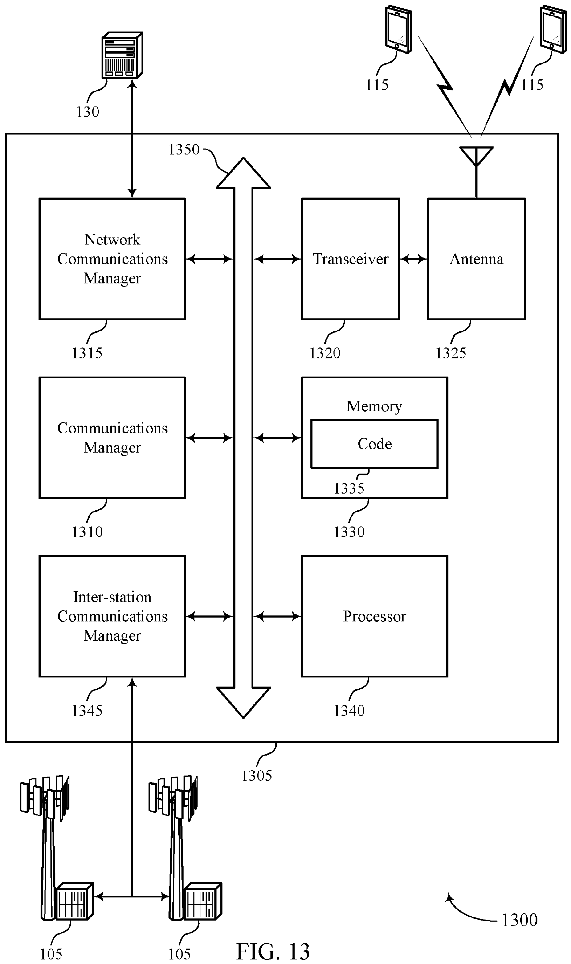

The receiver 1010 may receive information such as packets, user data, or control information associated with various information channels (e.g., control channels, data channels, and information related to uplink control channel codebook design in NR unlicensed, etc.). Information may be passed on to other components of the device 1005. The receiver 1010 may be an example of aspects of the transceiver 1320 described with reference to FIG. 13. The receiver 1010 may utilize a single antenna or a set of antennas.

The communications manager 1015 may transmit a set of downlink grant for a corresponding set of data transmissions, each downlink grant identifying resources for receiving the corresponding data transmission and indicating whether the corresponding data transmission includes a last data transmission for a reporting occasion and receive a feedback report during the reporting occasion, where a format of the feedback report is based on whether a last downlink grant for the last data transmission associated with the reporting occasion was received. The communications manager 1015 may be an example of aspects of the communications manager 1310 described herein.

The communications manager 1015, or its sub-components, may be implemented in hardware, code (e.g., software or firmware) executed by a processor, or any combination thereof. If implemented in code executed by a processor, the functions of the communications manager 1015, or its sub-components may be executed by a general-purpose processor, a DSP, an application-specific integrated circuit (ASIC), a FPGA or other programmable logic device, discrete gate or transistor logic, discrete hardware components, or any combination thereof designed to perform the functions described in the present disclosure.

The communications manager 1015, or its sub-components, may be physically located at various positions, including being distributed such that portions of functions are implemented at different physical locations by one or more physical components. In some examples, the communications manager 1015, or its sub-components, may be a separate and distinct component in accordance with various aspects of the present disclosure. In some examples, the communications manager 1015, or its sub-components, may be combined with one or more other hardware components, including but not limited to an input/output (I/O) component, a transceiver, a network server, another computing device, one or more other components described in the present disclosure, or a combination thereof in accordance with various aspects of the present disclosure.

The transmitter 1020 may transmit signals generated by other components of the device 1005. In some examples, the transmitter 1020 may be collocated with a receiver 1010 in a transceiver module. For example, the transmitter 1020 may be an example of aspects of the transceiver 1320 described with reference to FIG. 13. The transmitter 1020 may utilize a single antenna or a set of antennas.

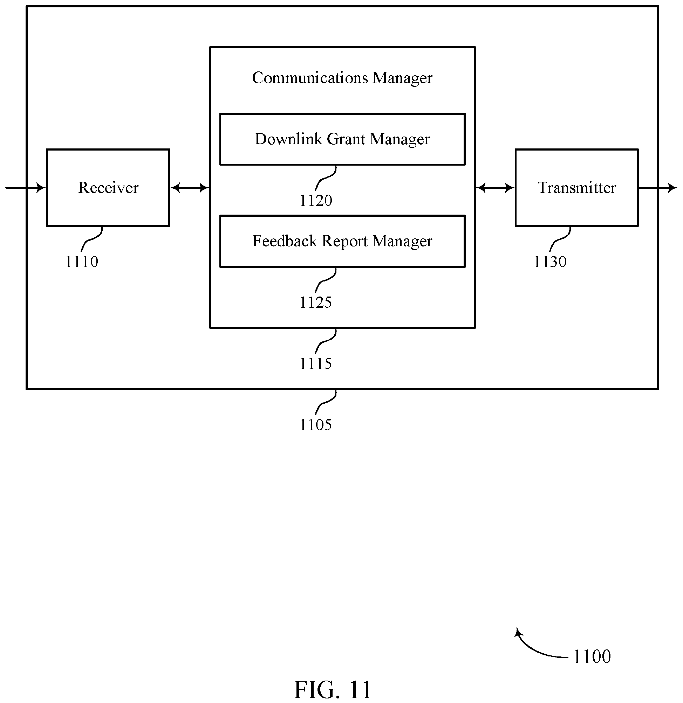

**FIG. 11** shows a block diagram 1100 of a device 1105 that supports uplink control channel codebook design in NR unlicensed in accordance with aspects of the present disclosure. The device 1105 may be an example of aspects of a device 1005, or a base station 105 as described herein. The device 1105 may include a receiver 1110, a communications manager 1115, and a transmitter 1130. The device 1105 may also include a processor. Each of these components may be in communication with one another (e.g., via one or more buses).

The receiver 1110 may receive information such as packets, user data, or control information associated with various information channels (e.g., control channels, data channels, and information related to uplink control channel codebook design in NR unlicensed, etc.). Information may be passed on to other components of the device 1105. The receiver 1110 may be an example of aspects of the transceiver 1320 described with reference to FIG. 13. The receiver 1110 may utilize a single antenna or a set of antennas.

The communications manager 1115 may be an example of aspects of the communications manager 1015 as described herein. The communications manager 1115 may include a downlink grant manager 1120 and a feedback report manager 1125. The communications manager 1115 may be an example of aspects of the communications manager 1310 described herein.

The downlink grant manager 1120 may transmit a set of downlink grant for a corresponding set of data transmissions, each downlink grant identifying resources for receiving the corresponding data transmission and indicating whether the corresponding data transmission includes a last data transmission for a reporting occasion.

The feedback report manager 1125 may receive a feedback report during the reporting occasion, where a format of the feedback report is based on whether a last downlink grant for the last data transmission associated with the reporting occasion was received.

The transmitter 1130 may transmit signals generated by other components of the device 1105. In some examples, the transmitter 1130 may be collocated with a receiver 1110 in a transceiver module. For example, the transmitter 1130 may be an example of aspects of the transceiver 1320 described with reference to FIG. 13. The transmitter 1130 may utilize a single antenna or a set of antennas.

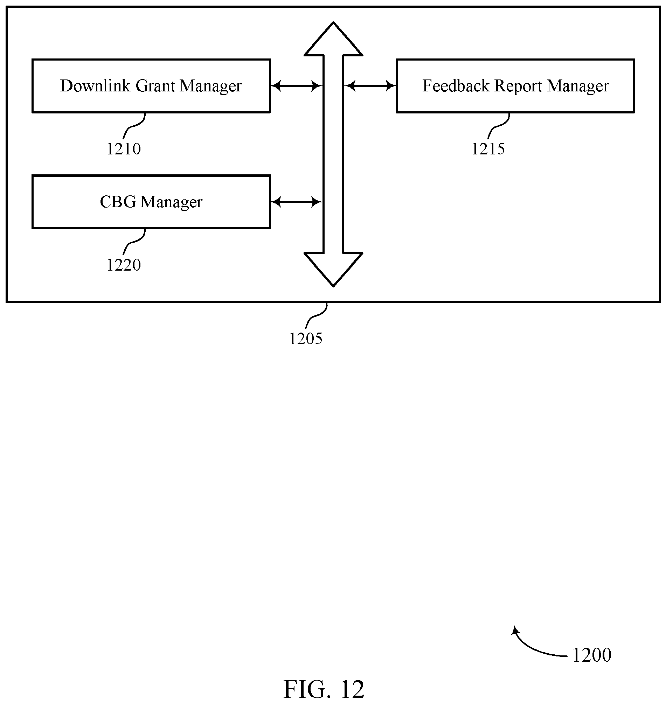

**FIG. 12** shows a block diagram 1200 of a communications manager 1205 that supports uplink control channel codebook design in NR unlicensed in accordance with aspects of the present disclosure. The communications manager 1205 may be an example of aspects of a communications manager 1015, a communications manager 1115, or a communications manager 1310 described herein. The communications manager 1205 may include a downlink grant manager 1210, a feedback report manager 1215, and a CBG manager 1220. Each of these modules may communicate, directly or indirectly, with one another (e.g., via one or more buses).

The downlink grant manager 1210 may transmit a set of downlink grant for a corresponding set of data transmissions, each downlink grant identifying resources for receiving the corresponding data transmission and indicating whether the corresponding data transmission includes a last data transmission for a reporting occasion.

In some examples, the downlink grant manager 1210 may encode two or more bits in a first subset of the set of downlink grants to indicate that the corresponding data transmissions are within a range of the last data transmission. In some examples, the downlink grant manager 1210 may encode the two or more bits in a second subset of the set of downlink grants to indicate that the corresponding data transmissions are not within a range of the last data transmission. In some cases, the set of data transmissions are communicated over an unlicensed radio frequency spectrum band.

The feedback report manager 1215 may receive a feedback report during the reporting occasion, where a format of the feedback report is based on whether a last downlink grant for the last data transmission associated with the reporting occasion was received.

The CBG manager 1220 may configure each of the set of downlink grants to indicate whether the corresponding data transmission was the last data transmission of the set of CBG configured data transmissions or the set of non-CBG configured data transmissions. In some cases, the set of data transmissions include a set of CBG configured data transmissions and a set of non-CBG configured data transmissions. In some cases, each of the set of CBG configured data transmissions and the set of non-CBG configured data transmissions includes two or more data transmissions.

**FIG. 13** shows a diagram of a system 1300 including a device 1305 that supports uplink control channel codebook design in NR unlicensed in accordance with aspects of the present disclosure. The device 1305 may be an example of or include the components of device 1005, device 1105, or a base station 105 as described herein. The device 1305 may include components for bi-directional voice and data communications including components for transmitting and receiving communications, including a communications manager 1310, a network communications manager 1315, a transceiver 1320, an antenna 1325, memory 1330, a processor 1340, and an inter-station communications manager 1345. These components may be in electronic communication via one or more buses (e.g., bus 1350).

The communications manager 1310 may transmit a set of downlink grant for a corresponding set of data transmissions, each downlink grant identifying resources for receiving the corresponding data transmission and indicating whether the corresponding data transmission includes a last data transmission for a reporting occasion and receive a feedback report during the reporting occasion, where a format of the feedback report is based on whether a last downlink grant for the last data transmission associated with the reporting occasion was received.

The network communications manager 1315 may manage communications with the core network (e.g., via one or more wired backhaul links). For example, the network communications manager 1315 may manage the transfer of data communications for client devices, such as one or more UEs 115.

The transceiver 1320 may communicate bi-directionally, via one or more antennas, wired, or wireless links as described above. For example, the transceiver 1320 may represent a wireless transceiver and may communicate bi-directionally with another wireless transceiver. The transceiver 1320 may also include a modem to modulate the packets and provide the modulated packets to the antennas for transmission, and to demodulate packets received from the antennas.

In some cases, the wireless device may include a single antenna 1325. However, in some cases the device may have more than one antenna 1325, which may be capable of concurrently transmitting or receiving multiple wireless transmissions.

The memory 1330 may include RAM, ROM, or a combination thereof. The memory 1330 may store computer-readable code 1335 including instructions that, when executed by a processor (e.g., the processor 1340) cause the device to perform various functions described herein. In some cases, the memory 1330 may contain, among other things, a BIOS which may control basic hardware or software operation such as the interaction with peripheral components or devices.

The processor 1340 may include an intelligent hardware device, (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 1340 may be configured to operate a memory array using a memory controller. In some cases, a memory controller may be integrated into processor 1340. The processor 1340 may be configured to execute computer-readable instructions stored in a memory (e.g., the memory 1330) to cause the device 1305 to perform various functions (e.g., functions or tasks supporting uplink control channel codebook design in NR unlicensed).

The inter-station communications manager 1345 may manage communications with other base station 105, and may include a controller or scheduler for controlling communications with UEs 115 in cooperation with other base stations 105. For example, the inter-station communications manager 1345 may coordinate scheduling for transmissions to UEs 115 for various interference mitigation techniques such as beamforming or joint transmission. In some examples, the inter-station communications manager 1345 may provide an X2 interface within an LTE/LTE-A wireless communication network technology to provide communication between base stations 105.

The code 1335 may include instructions to implement aspects of the present disclosure, including instructions to support wireless communications. The code 1335 may be stored in a non-transitory computer-readable medium such as system memory or other type of memory. In some cases, the code 1335 may not be directly executable by the processor 1340 but may cause a computer (e.g., when compiled and executed) to perform functions described herein.

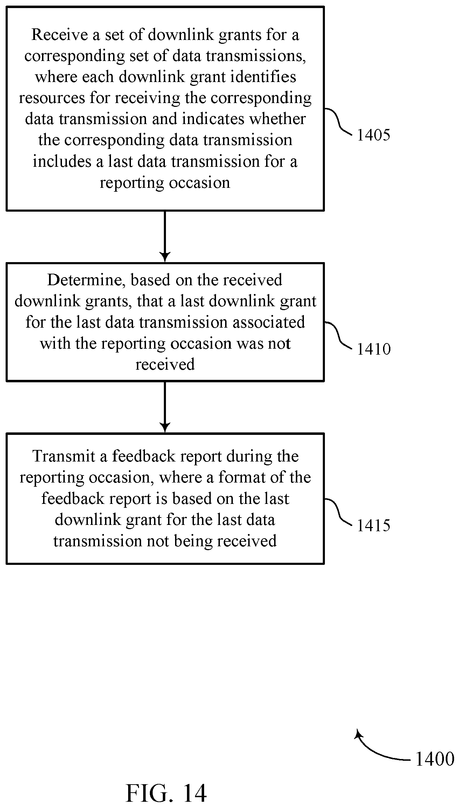

**FIG. 14** shows a flowchart illustrating a method 1400 that supports uplink control channel codebook design in NR unlicensed in accordance with aspects of the present disclosure. The operations of method 1400 may be implemented by a UE 115 or its components as described herein. For example, the operations of method 1400 may be performed by a communications manager as described with reference to FIGs. 6 through 9. In some examples, a UE may execute a set of instructions to control the functional elements of the UE to perform the functions described below. Additionally or alternatively, a UE may perform aspects of the functions described below using special-purpose hardware.

At 1405, the UE may receive a set of downlink grants for a corresponding set of data transmissions, where each downlink grant identifies resources for receiving the corresponding data transmission and indicates whether the corresponding data transmission includes a last data transmission for a reporting occasion. The operations of 1405 may be performed according to the methods described herein. In some examples, aspects of the operations of 1405 may be performed by a downlink grant manager as described with reference to FIGs. 6 through 9.

At 1410, the UE may determine, based on the received downlink grants, that a last downlink grant for the last data transmission associated with the reporting occasion was not received. The operations of 1410 may be performed according to the methods described herein. In some examples, aspects of the operations of 1410 may be performed by a reporting occasion manager as described with reference to FIGs. 6 through 9.

At 1415, the UE may transmit a feedback report during the reporting occasion, where a format of the feedback report is based on the last downlink grant for the last data transmission not being received. The operations of 1415 may be performed according to the methods described herein. In some examples, aspects of the operations of 1415 may be performed by a feedback report manager as described with reference to FIGs. 6 through 9.

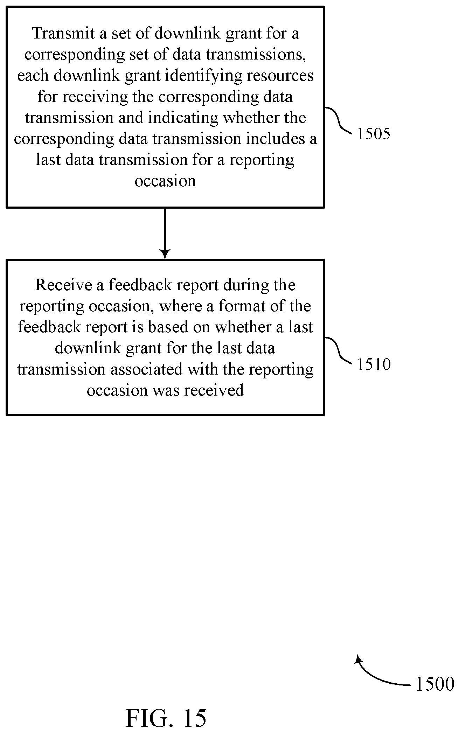

**FIG. 15** shows a flowchart illustrating a method 1500 that supports uplink control channel codebook design in NR unlicensed in accordance with aspects of the present disclosure. The operations of method 1500 may be implemented by a base station 105 or its components as described herein. For example, the operations of method 1500 may be performed by a communications manager as described with reference to FIGs. 10 through 13. In some examples, a base station may execute a set of instructions to control the functional elements of the base station to perform the functions described below. Additionally or alternatively, a base station may perform aspects of the functions described below using special-purpose hardware.

At 1505, the base station may transmit a set of downlink grant for a corresponding set of data transmissions, each downlink grant identifying resources for receiving the corresponding data transmission and indicating whether the corresponding data transmission includes a last data transmission for a reporting occasion. The operations of 1505 may be performed according to the methods described herein. In some examples, aspects of the operations of 1505 may be performed by a downlink grant manager as described with reference to FIGs. 10 through 13.

At 1510, the base station may receive a feedback report during the reporting occasion, where a format of the feedback report is based on whether a last downlink grant for the last data transmission associated with the reporting occasion was received. The operations of 1510 may be performed according to the methods described herein. In some examples, aspects of the operations of 1510 may be performed by a feedback report manager as described with reference to FIGs. 10 through 13.

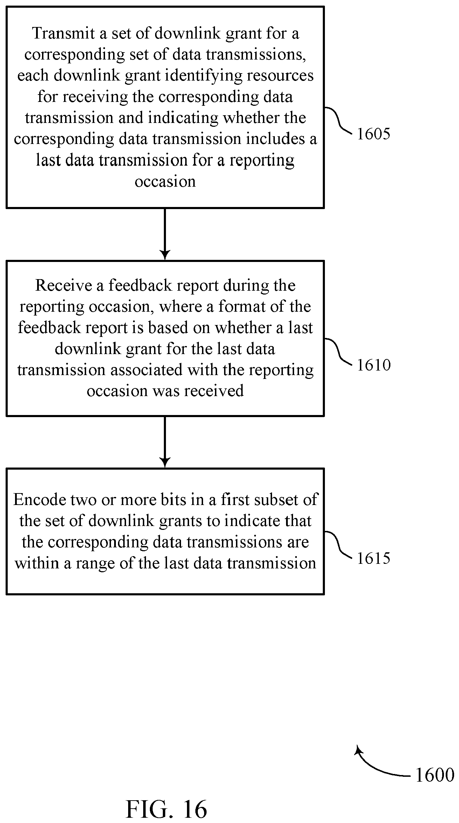

**FIG. 16** shows a flowchart illustrating a method 1600 that supports uplink control channel codebook design in NR unlicensed in accordance with aspects of the present disclosure. The operations of method 1600 may be implemented by a base station 105 or its components as described herein. For example, the operations of method 1600 may be performed by a communications manager as described with reference to FIGs. 10 through 13. In some examples, a base station may execute a set of instructions to control the functional elements of the base station to perform the functions described below. Additionally or alternatively, a base station may perform aspects of the functions described below using special-purpose hardware.

At 1605, the base station may transmit a set of downlink grant for a corresponding set of data transmissions, each downlink grant identifying resources for receiving the corresponding data transmission and indicating whether the corresponding data transmission includes a last data transmission for a reporting occasion. The operations of 1605 may be performed according to the methods described herein. In some examples, aspects of the operations of 1605 may be performed by a downlink grant manager as described with reference to FIGs. 10 through 13.

At 1610, the base station may receive a feedback report during the reporting occasion, where a format of the feedback report is based on whether a last downlink grant for the last data transmission associated with the reporting occasion was received. The operations of 1610 may be performed according to the methods described herein. In some examples, aspects of the operations of 1610 may be performed by a feedback report manager as described with reference to FIGs. 10 through 13.

At 1615, the base station may encode two or more bits in a first subset of the set of downlink grants to indicate that the corresponding data transmissions are within a range of the last data transmission. The operations of 1615 may be performed according to the methods described herein. In some examples, aspects of the operations of 1615 may be performed by a downlink grant manager as described with reference to FIGs. 10 through 13.

It should be noted that the methods described herein describe possible implementations, and that the operations and the steps may be rearranged or otherwise modified and that other implementations are possible. Further, aspects from two or more of the methods may be combined.

Techniques described herein may be used for various wireless communication systems such as code division multiple access (CDMA), time division multiple access (TDMA), frequency division multiple access (FDMA), orthogonal frequency division multiple access (OFDMA), single carrier frequency division multiple access (SC-FDMA), and other systems. A CDMA system may implement a radio technology such as CDMA2000, Universal Terrestrial Radio Access (UTRA), etc. CDMA2000 covers IS-2000, IS-95, and IS-856 standards. IS-2000 Releases may be commonly referred to as CDMA2000 1X, 1X, etc. IS-856 (TIA-856) is commonly referred to as CDMA2000 1xEV-DO, High Rate Packet Data (HRPD), etc. UTRA includes Wideband CDMA (WCDMA) and other variants of CDMA. A TDMA system may implement a radio technology such as Global System for Mobile Communications (GSM).

An OFDMA system may implement a radio technology such as Ultra Mobile Broadband (UMB), Evolved UTRA (E-UTRA), Institute of Electrical and Electronics Engineers (IEEE) 802.11 (Wi-Fi), IEEE 802.16 (WiMAX), IEEE 802.20, Flash-OFDM, etc. UTRA and E-UTRA are part of Universal Mobile Telecommunications System (UMTS). LTE, LTE-A, and LTE-A Pro are releases of UMTS that use E-UTRA. UTRA, E-UTRA, UMTS, LTE, LTE-A, LTE-A Pro, NR, and GSM are described in documents from the organization named "3rd Generation Partnership Project" (3GPP). CDMA2000 and UMB are described in documents from an organization named "3rd Generation Partnership Project 2" (3GPP2). The techniques described herein may be used for the systems and radio technologies mentioned herein as well as other systems and radio technologies. While aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR applications.

A macro cell generally covers a relatively large geographic area (e.g., several kilometers in radius) and may allow unrestricted access by UEs with service subscriptions with the network provider. A small cell may be associated with a lower-powered base station, as compared with a macro cell, and a small cell may operate in the same or different (e.g., licensed, unlicensed, etc.) frequency bands as macro cells. Small cells may include pico cells, femto cells, and micro cells according to various examples. A pico cell, for example, may cover a small geographic area and may allow unrestricted access by UEs with service subscriptions with the network provider. A femto cell may also cover a small geographic area (e.g., a home) and may provide restricted access by UEs having an association with the femto cell (e.g., UEs in a closed subscriber group (CSG), UEs for users in the home, and the like). An eNB for a macro cell may be referred to as a macro eNB. An eNB for a small cell may be referred to as a small cell eNB, a pico eNB, a femto eNB, or a home eNB. An eNB may support one or multiple (e.g., two, three, four, and the like) cells, and may also support communications using one or multiple component carriers.

The wireless communication systems described herein may support synchronous or asynchronous operation. For synchronous operation, the base stations may have similar frame timing, and transmissions from different base stations may be approximately aligned in time. For asynchronous operation, the base stations may have different frame timing, and transmissions from different base stations may not be aligned in time. The techniques described herein may be used for either synchronous or asynchronous operations.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and modules described in connection with the disclosure herein may be implemented or performed with a general-purpose processor, a DSP, an ASIC, an FPGA, or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein can be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that can be accessed by a general purpose or special purpose computer. By way of example, and not limitation, non-transitory computer-readable media may include random-access memory (RAM), read-only memory (ROM), electrically erasable programmable ROM (EEPROM), flash memory, compact disk (CD) ROM or other optical disk storage, magnetic disk storage or other magnetic storage devices, or any other non-transitory medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an exemplary step that is described as "based on condition A" may be based on both a condition A and a condition B without departing from the scope of the present disclosure. In other words, as used herein, the phrase "based on" shall be construed in the same manner as the phrase "based at least in part on."

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "exemplary" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and devices are shown in block diagram form in order to avoid obscuring the concepts of the described examples.

## Claims

1. A method (1400) for wireless communication at a user equipment, UE (115, 510), comprising:
receiving (515, 1405) a plurality of downlink grants for a corresponding plurality of data transmissions, wherein each downlink grant identifies resources for receiving the corresponding data transmission and includes a downlink assignment indicator for the corresponding data transmission and includes two or more bits indicating whether the corresponding data transmission is within a range of a last data transmission for a reporting occasion;
determining (525, 1410), based at least in part on the received downlink grants, that a last downlink grant for the last data transmission associated with the reporting occasion was not received; and
transmitting (530, 1415) a feedback report during the reporting occasion, wherein a format of the feedback report is based at least in part on the last downlink grant for the last data transmission not being received.

2. The method of claim 1, wherein the plurality of data transmissions comprise a set of code block group, CBG, configured data transmissions and a set of non-CBG configured data transmissions.

3. The method of claim 2, further comprising:
determining, for each of the received downlink grants, whether the corresponding data transmission was the last data transmission of the set of CBG configured data transmissions or the set of non-CBG configured data transmissions.

4. The method of claim 2, wherein each of the set of CBG configured data transmissions and the set of non-CBG configured data transmissions comprises two or more data transmissions.

5. The method of claim 1, wherein the feedback report is generated based at least in part on the failure to receive the last downlink grant, wherein generating the feedback report comprises:
inputting a negative acknowledgment feedback state for the last data transmission based at least in part on the failure to receive the last downlink grant.

6. The method of claim 1, wherein the plurality of data transmissions are communicated over an unlicensed radio frequency spectrum band.

7. A method (1500) for wireless communication at a base station (105), comprising:
transmitting (515, 1505) a plurality of downlink grants for a corresponding plurality of data transmissions, each downlink grant identifying resources for receiving the corresponding data transmission and includes a downlink assignment indicator for the corresponding data transmission and includes two or more bits indicating whether the corresponding data transmission is within a range of a last data transmission for a reporting occasion; and
receiving (530, 1510) a feedback report during the reporting occasion, wherein a format of the feedback report is based at least in part on whether a last downlink grant for the last data transmission associated with the reporting occasion was received.

8. The method of claim 7, wherein the plurality of data transmissions comprise a set of code block group, CBG, configured data transmissions and a set of non-CBG configured data transmissions, and further comprising:
configuring each of the plurality of downlink grants to indicate whether the corresponding data transmission was the last data transmission of the set of CBG configured data transmissions or the set of non-CBG configured data transmissions.

9. The method of claim 7, wherein the plurality of data transmissions comprise a set of code block group, CBG, configured data transmissions and a set of non-CBG configured data transmissions, and wherein each of the set of CBG configured data transmissions and the set of non-CBG configured data transmissions comprises two or more data transmissions.

10. The method of claim 7, further comprising:
encoding two or more bits in a first subset of the plurality of downlink grants to indicate that the corresponding data transmissions are within a range of the last data transmission, and
encoding the two or more bits in a second subset of the plurality of downlink grants to indicate that the corresponding data transmissions are not within a range of the last data transmission.

11. The method of claim 7, wherein the plurality of data transmissions are communicated over an unlicensed radio frequency spectrum band.

12. An apparatus (705) for wireless communication at a user equipment, UE, comprising:
means for receiving (710, 720) a plurality of downlink grants for a corresponding plurality of data transmissions, wherein each downlink grant identifies resources for receiving the corresponding data transmission and includes a downlink assignment indicator for the corresponding data transmission and includes two or more bits indicating whether the corresponding data transmission is within a range of a last data transmission for a reporting occasion;
means for determining (725), based at least in part on the received downlink grants, that a last downlink grant for the last data transmission associated with the reporting occasion was not received; and
means for transmitting (730, 735) a feedback report during the reporting occasion, wherein a format of the feedback report is based at least in part on the last downlink grant for the last data transmission not being received.

13. The apparatus of claim 12, further comprising means for carrying out the method of any one of claims 2 to 6.

14. An apparatus (1105) for wireless communication at a base station, comprising:
means for transmitting (1120, 1130) a plurality of downlink grant for a corresponding plurality of data transmissions, each downlink grant identifying resources for receiving the corresponding data transmission and includes a downlink assignment indicator for the corresponding data transmission and includes two or more bits indicating whether the corresponding data transmission is within a range of a last data transmission for a reporting occasion; and
means for receiving (1110, 1125) a feedback report during the reporting occasion, wherein a format of the feedback report is based at least in part on whether a last downlink grant for the last data transmission associated with the reporting occasion was received.

15. The apparatus of claim 14, further comprising means for carrying out the method of any one of claims 8 to 11.

## Patentansprüche

1. Ein Verfahren (1400) für eine drahtlose Kommunikation an einem Benutzergerät (User Equipment bzw. UE) (115, 510), aufweisend:
Empfangen (515, 1405) einer Vielzahl von Abwärtsstreckegewährungen für eine entsprechende Vielzahl von Datensendungen, wobei jede Abwärtsstreckegewährung Ressourcen für das Empfangen der entsprechenden Datensendung identifiziert und einen Abwärtsstreckezuweisungsindikator für die entsprechende Datensendung und zwei oder mehr Bits, die angeben, ob die entsprechende Datensendung innerhalb eines Bereichs einer letzten Datensendung für eine Berichtsgelegenheit liegt, enthält,
Bestimmen (525, 1410), basierend wenigstens teilweise auf den empfangenen Abwärtsstreckegewährungen, dass eine letzte Abwärtsstreckegewährung für die mit der Berichtsgelegenheit assoziierte letzte Datensendung nicht empfangen wurde, und
Senden (530, 1415) eines Rückmeldungsberichts während der Berichtsgelegenheit, wobei das Format des Rückmeldungsberichts wenigstens teilweise darauf basiert, dass die letzte Abwärtsstreckegewährung für die letzte Datensendung nicht empfangen wurde.

2. Verfahren nach Anspruch 1, wobei die Vielzahl von Datensendungen einen Satz von Codeblockgruppe (CBG)-konfigurierten Datensendungen und einen Satz von nicht-CBG-konfigurierten Datensendungen umfassen.

3. Verfahren nach Anspruch 2, das weiterhin aufweist:
Bestimmen, für jede der empfangenen Abwärtsstreckegewährungen, ob die entsprechende Datensendung die letzte Datensendung des Satzes von CBG-konfigurierten Datensendungen oder des Satzes von nicht-CBG-konfigurierten Datensendungen war.

4. Verfahren nach Anspruch 2, wobei der Satz von CBG-konfigurierten Datensendungen und der Satz von nicht-CBG-konfigurierten Datensendungen jeweils zwei oder mehr Datensendungen umfassen.

5. Verfahren nach Anspruch 1, wobei der Rückmeldungsbericht basierend wenigstens teilweise auf dem nicht-Empfangen der letzten Abwärtsstreckegewährung generiert wird, wobei das Generieren des Rückmeldungsberichts aufweist:
Eingeben eines Negativbestätigung-Rückmeldungszustands für die letzte Datensendung basierend wenigstens teilweise auf dem nicht-Empfangen der letzten Abwärtsstreckegewährung.

6. Verfahren nach Anspruch 1, wobei die Vielzahl von Datensendungen über ein nicht-lizenziertes Hochfrequenzspektralband kommuniziert werden.

7. Ein Verfahren (1500) für eine drahtlose Kommunikation an einer Basisstation (105), aufweisend:
Senden (515, 1505) einer Vielzahl von Abwärtsstreckegewährungen für eine entsprechende Vielzahl von Datensendungen, wobei jede Abwärtsstreckegewährung Ressourcen für das Empfangen der entsprechenden Datensendung identifiziert und einen Abwärtsstreckezuweisungsindikator für die entsprechende Datensendung und zwei oder mehr Bits, die angeben, ob die entsprechende Datensendung innerhalb eines Bereichs einer letzten Datensendung für eine Berichtsgelegenheit liegt, enthält, und
Empfangen (530, 1510) eines Rückmeldungsberichts während der Berichtsgelegenheit, wobei das Format des Rückmeldungsberichts wenigstens teilweise darauf basiert, ob eine letzte Abwärtsstreckegewährung für die mit der Berichtsgelegenheit assoziierte letzte Datensendung empfangen wurde.

8. Verfahren nach Anspruch 7, wobei die Vielzahl von Datensendungen einen Satz von Codeblockgruppe (CBG)-konfigurierten Datensendungen und einen Satz von nicht-CBG-konfigurierten Datensendungen aufweisen, wobei das Verfahren weiterhin aufweist:
Konfigurieren jeder aus der Vielzahl von Abwärtsstreckegewährungen für das Angeben, ob die entsprechende Datensendung die letzte Datensendung des Satzes von CBG-konfigurierten Datensendungen oder des Satzes von nicht-CBG-konfigurierten Datensendungen war.

9. Verfahren nach Anspruch 7, wobei die Vielzahl von Datensendungen einen Satz von Codeblockgruppe (CBG)-konfigurierten Datensendungen und einen Satz von nicht-CBG-konfigurierten Datensendungen umfassen und wobei der Satz von CBG-konfigurierten Datensendungen und der Satz von nicht-CBG-konfigurierten Datensendungen jeweils zwei oder mehr Datensendungen umfassen.

10. Verfahren nach Anspruch 7, das weiterhin aufweist:
Codieren von zwei oder mehr Bits in einem ersten Teilsatz aus der Vielzahl von Abwärtsstreckegewährungen, um anzugeben, dass die entsprechenden Datensendungen in einem Bereich der letzten Datensendung liegen, und
Codieren der zwei oder mehr Bits in einem zweiten Teilsatz aus der Vielzahl von Abwärtsstreckegewährungen, um anzugeben, dass die entsprechenden Datensendungen nicht in einem Bereich der letzten Datensendung liegen.

11. Verfahren nach Anspruch 7, wobei die Vielzahl von Datensendungen über ein nicht-lizenziertes Hochfrequenzspektralband kommuniziert werden.

12. Eine Vorrichtung (705) für eine drahtlose Kommunikation an einem Benutzergerät (User Equipment bzw. UE), aufweisend:
Mittel (710, 720) zum Empfangen einer Vielzahl von Abwärtsstreckegewährungen für eine entsprechende Vielzahl von Datensendungen, wobei jede Abwärtsstreckegewährung Ressourcen für das Empfangen der entsprechenden Datensendung identifiziert und einen Abwärtsstreckezuweisungsindikator für die entsprechende Datensendung und zwei oder mehr Bits, die angeben, ob die entsprechende Datensendung innerhalb eines Bereichs einer letzten Datensendung für eine Berichtsgelegenheit liegt, enthält,
Mittel (725) zum Bestimmen, basierend wenigstens teilweise auf den empfangenen Abwärtsstreckegewährungen, dass eine letzte Abwärtsstreckegewährung für die mit der Berichtsgelegenheit assoziierte letzte Datensendung nicht empfangen wurde, und
Mittel (730, 735) zum Senden eines Rückmeldungsberichts während der Berichtsgelegenheit, eines Rückmeldungsberichts während der Berichtsgelegenheit, wobei das Format des Rückmeldungsberichts wenigstens teilweise darauf basiert, dass die letzte Abwärtsstreckegewährung für die letzte Datensendung nicht empfangen wurde.

13. Vorrichtung nach Anspruch 12, die weiterhin Mittel zum Ausführen des Verfahrens der Ansprüche 2 bis 6 aufweist.

14. Eine Vorrichtung (1105) für eine drahtlose Kommunikation an einer Basisstation, aufweisend:
Mittel (1120, 1130) zum Senden einer Vielzahl von Abwärtsstreckegewährungen für eine entsprechende Vielzahl von Datensendungen, wobei jede Abwärtsstreckegewährung Ressourcen für das Empfangen der entsprechenden Datensendung identifiziert und einen Abwärtsstreckezuweisungsindikator für die entsprechende Datensendung und zwei oder mehr Bits, die angeben, ob die entsprechende Datensendung innerhalb eines Bereichs einer letzten Datensendung für eine Berichtsgelegenheit liegt, enthält, und
Mittel (1110, 1125) zum Empfangen eines Rückmeldungsberichts während der Berichtsgelegenheit, wobei das Format des Rückmeldungsberichts wenigstens teilweise darauf basiert, ob eine letzte Abwärtsstreckegewährung für die mit der Berichtsgelegenheit assoziierte letzte Datensendung empfangen wurde.

15. Vorrichtung nach Anspruch 14, die weiterhin Mittel zum Ausführen des Verfahrens der Ansprüche 8 bis 11 aufweist.

## Revendications

1. Procédé (1400) pour une communication sans fil au niveau d'un équipement d'utilisateur, UE (115, 510), comprenant :
une réception (515, 1405) d'une pluralité d'octrois de liaison descendante pour une pluralité correspondante de transmissions de données, dans lequel chaque octroi de liaison descendante identifie des ressources pour une réception de la transmission de données correspondante et inclut un indicateur d'attribution de liaison descendante pour la transmission de données correspondante et inclut deux ou plusieurs bits indiquant le fait que la transmission de données correspondante se trouve ou non au sein d'une plage d'une dernière transmission de données pour une occasion de rapport ;
une détermination (525, 1410), sur la base au moins en partie des octrois de liaison descendante reçus, du fait qu'un dernier octroi de liaison descendante pour la dernière transmission de données associée à l'occasion de rapport n'a pas été reçu ; et
une transmission (530, 1415) d'un rapport de rétroaction pendant l'occasion de rapport, dans lequel un format du rapport de rétroaction est basé au moins en partie sur le fait que le dernier octroi de liaison descendante pour la dernière transmission de données n'est pas reçu.

2. Procédé selon la revendication 1, dans lequel la pluralité de transmissions de données comprend un ensemble de transmissions de données configurées en groupe de blocs de code, CBG, et un ensemble de transmissions de données non configurées en CBG.

3. Procédé selon la revendication 2, comprenant en outre :
une détermination, pour chacun des octrois de liaison descendante reçus, du fait que la transmission de données correspondante était la dernière transmission de données de l'ensemble de transmissions de données configurées en CBG ou de l'ensemble de transmissions de données non configurées en CBG.

4. Procédé selon la revendication 2, dans lequel chacun de l'ensemble de transmissions de données configurées en CBG et l'ensemble de transmissions de données non configurées en CBG comprend deux ou plusieurs transmissions de données.

5. Procédé selon la revendication 1, dans lequel le rapport de rétroaction est généré sur la base au moins en partie de l'échec d'une réception du dernier octroi de liaison descendante, dans lequel une génération du rapport de rétroaction comprend :
une entrée d'un état de rétroaction d'accusé de réception négatif pour la dernière transmission de données sur la base au moins en partie de l'échec d'une réception du dernier octroi de liaison descendante.

6. Procédé selon la revendication 1, dans lequel la pluralité de transmissions de données sont communiquées sur une bande du spectre radiofréquence sans licence.

7. Procédé (1500) pour une communication sans fil au niveau d'une station de base (105), comprenant :
une transmission (515, 1505) d'une pluralité d'octrois de liaison descendante pour une pluralité correspondante de transmissions de données, chaque octroi de liaison descendante identifiant des ressources pour une réception de la transmission de données correspondante et inclut un indicateur d'attribution de liaison descendante pour la transmission de données correspondante et inclut deux ou plusieurs bits indiquant le fait que la transmission de données correspondante se trouve au sein d'une plage d'une dernière transmission de données pour une occasion de rapport ; et
une réception (530, 1510) d'un rapport de rétroaction pendant l'occasion de rapport, dans lequel un format du rapport de rétroaction est basé au moins en partie sur le fait qu'un dernier octroi de liaison descendante pour la dernière transmission de données associée à l'occasion de rapport a été reçu.

8. Procédé selon la revendication 7, dans lequel la pluralité de transmissions de données comprend un ensemble de transmissions de données configurées en groupe de blocs de code, CBG, et un ensemble de transmissions de données non configurées en CBG, et comprenant en outre :
une configuration de chacun de la pluralité d'octrois de liaison descendante pour indiquer le fait que la transmission de données correspondante était la dernière transmission de données de l'ensemble de transmissions de données configurées en CBG ou de l'ensemble de transmissions de données non configurées en CBG.

9. Procédé selon la revendication 7, dans lequel la pluralité de transmissions de données comprend un ensemble de transmissions de données configurées en groupe de blocs de code, CBG, et un ensemble de transmissions de données non configurées en CBG, et dans lequel chacun de l'ensemble de transmissions de données configurées en CBG et de l'ensemble de transmissions de données non configurées en CBG comprend deux ou plusieurs transmissions de données.

10. Procédé selon la revendication 7, comprenant en outre :
un codage de deux ou plusieurs bits dans un premier sous-ensemble de la pluralité d'octrois de liaison descendante pour indiquer que les transmissions de données correspondantes se trouvent au sein d'une plage de la dernière transmission de données, et
un codage des deux ou plusieurs bits dans un second sous-ensemble de la pluralité d'octrois de liaison descendante pour indiquer que les transmissions de données correspondantes ne se trouvent pas au sein d'une plage de la dernière transmission de données.

11. Procédé selon la revendication 7, dans lequel la pluralité de transmissions de données sont communiquées sur une bande du spectre radiofréquence sans licence.

12. Appareil (705) pour une communication sans fil au niveau d'un équipement d'utilisateur, UE, comprenant :
un moyen de réception (710, 720) d'une pluralité d'octrois de liaison descendante pour une pluralité correspondante de transmissions de données, dans lequel chaque octroi de liaison descendante identifie des ressources pour une réception de la transmission de données correspondante et inclut un indicateur d'attribution de liaison descendante pour la transmission de données correspondante et inclut deux ou plusieurs bits indiquant le fait que la transmission de données correspondante se trouve ou non au sein d'une plage d'une dernière transmission de données pour une occasion de rapport ;
un moyen de détermination (725), sur la base au moins en partie des octrois de liaison descendante reçus, du fait qu'un dernier octroi de liaison descendante pour la dernière transmission de données associée à l'occasion de rapport n'a pas été reçu ; et
un moyen de transmission (730, 735) d'un rapport de rétroaction pendant l'occasion de rapport, dans lequel un format du rapport de rétroaction est basé au moins en partie sur le fait que le dernier octroi de liaison descendante pour la dernière transmission de données n'est pas reçu.

13. Appareil selon la revendication 12, comprenant en outre un moyen de réalisation du procédé selon l'une quelconque des revendications 2 à 6.

14. Appareil (1105) pour une communication sans fil au niveau d'une station de base, comprenant :
un moyen de transmission (1120, 1130) d'une pluralité d'octrois de liaison descendante pour une pluralité correspondante de transmissions de données, chaque octroi de liaison descendante identifiant des ressources pour une réception de la transmission de données correspondante et inclut un indicateur d'attribution de liaison descendante pour la transmission de données correspondante et inclut deux ou plusieurs bits indiquant le fait que la transmission de données correspondante se trouve ou non au sein d'une plage d'une dernière transmission de données pour une occasion de rapport ; et
un moyen de réception (1110, 1125) d'un rapport de rétroaction pendant l'occasion de rapport, dans lequel un format du rapport de rétroaction est basé au moins en partie sur le fait qu'un dernier octroi de liaison descendante pour la dernière transmission de données associée à l'occasion de rapport a été reçu ou non.

15. Appareil selon la revendication 14, comprenant en outre un moyen de réalisation du procédé selon l'une quelconque des revendications 8 à 11.
